(19) Europäisches Patentamt
European Patent Office
Office européen des brevets

(11) EP 2 586 840 A1

(12) **EUROPEAN PATENT APPLICATION**
published in accordance with Art. 153(4) EPC

(43) Date of publication:
**01.05.2013 Bulletin 2013/18**

(21) Application number: **11798240.5**

(22) Date of filing: **23.06.2011**

(51) Int Cl.:
***C09D 167/00*** (2006.01) ***A01N 25/10*** (2006.01)
***A01N 55/02*** (2006.01) ***A01P 17/00*** (2006.01)
***B05D 5/00*** (2006.01) ***B63B 59/04*** (2006.01)
***C09D 5/16*** (2006.01) ***C09D 7/12*** (2006.01)
***C09D 133/04*** (2006.01) ***C09D 157/02*** (2006.01)
***C09D 161/02*** (2006.01) ***C09D 193/04*** (2006.01)

(86) International application number:
**PCT/JP2011/064466**

(87) International publication number:
**WO 2011/162359 (29.12.2011 Gazette 2011/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2010 JP 2010143183**

(71) Applicant: **Chugoku Marine Paints, Ltd.**
**Hiroshima 739-0652 (JP)**

(72) Inventors:
- **NIIMOTO, Jyunji**
**Otake-shi**
**Hiroshima 739-0652 (JP)**
- **SEKI, Yasuyuki**
**Otake-shi**
**Hiroshima 739-0652 (JP)**
- **MASUDA, Satoshi**
**Otake-shi**
**Hiroshima 739-0652 (JP)**

(74) Representative: **HOFFMANN EITLE**
**Patent- und Rechtsanwälte**
**Arabellastrasse 4**
**81925 München (DE)**

(54) **STAIN-PROOF COATING COMPOSITION, STAIN-PROOF COATING FILM, AND METHOD FOR PREVENTION OF STAINING OF BASE MATERIAL**

(57) To provide an antifouling coating composition which does not contain copper or any copper compound (e.g., cupric oxide) and therefore enables the production of an antifouling coating film that does not undergo discoloration or cracking caused by ultraviolet ray or moisture, can have a low VOC and long-term antifouling properties at high levels simultaneously, and has excellent mechanical strength. A two-part hydrolysable antifouling coating composition of the present invention comprises two liquids, i.e., a first component containing a polyester resin having a solid content acid value and a hydroxyl value of 50-200 mgKOH/g and 100 mgKOH/g or less, respectively, and having a viscosity of 500 mPa·s or less at 25°C; and a second component in paste form containing a zinc oxide, and based on the total amount of the first and second components, the content of volatile organic compound is 400g/L or less, and copper or any copper compound is not contained.

[Fig.1]

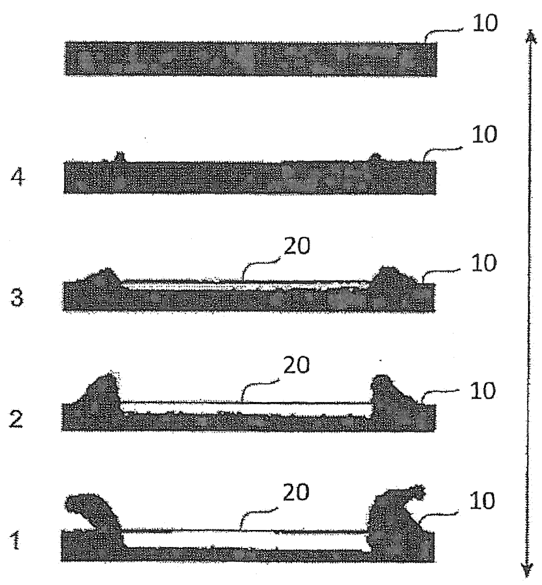


EP 2 586 840 A1

## Description

### Technical Field

The present invention relates to a two-part hydrolysable antifouling coating composition having a low environmental load and a reduced impact on human body, and that can impart excellent antifouling property, etc. to the substrate surfaces of ships, underwater structures, fishing nets, fishing gears and the like; and relates to an antifouling method for an antifouling coating film and a substrate employing the two-part hydrolysable antifouling coating composition (method of producing an antifouling substrate).

### Background Art

The substrate surfaces for ships, underwater structures, fishing nets, and the like which are exposed to water for long term, are easily attached by various aquatic creatures including animals as oysters, mussels and barnacles, plants as sea weeds, and bacteria. Proliferation of such aquatic creatures on the substrate surfaces increases the surface roughness of ship, and therefore leading to the speed reduction, fuel cost increase, and damage to the anticorrosive coating films applied on the substrate surfaces, possibly resulting in deteriorated strength and functionality as well as extremely shortened life time to underwater structures. In addition, attachment and proliferation of such aquatic creatures on fishing nets including aquaculture nets and fixed nets may cause serious problems such as oxygen deficiency mortality of caught fish because of the obstruction on the mesh. Furthermore, attachment and proliferation of aquatic creatures on seawater plumbing pipes for thermal power, nuclear power plants, etc. may interfere with the circulation of cooling water supply. To solve such problems, research and development efforts have been directed at various antifouling coatings to be applied on substrate surfaces so as to prevent aquatic creatures from attaching.

As a conventional antifouling coating, an antifouling coating composition employing a hydrolysable polyester resins as a resin is known. Since polyester resins are produced by esterification of dehydration condensation between acids and alcohols, the resins are easily subjected to hydrolysis, excel in antifouling properties, and can be readily absorbed into the metabolism process of microorganisms through hydrolysis.

For example, Patent document 1 discloses an antifouling coating using an aliphatic polyester as a hydrolysable resin, the aliphatic polyester is prepared by copolymerizing one or more of glycerin, ethylene glycol, and 1,4-butanediols with a polyester comprising succinic acid and 1,2-propylene glycol, Patent document 2 discloses an antifouling coating comprising a hydrolysable polyester resin obtained by reacting an oxyacid such as lactic acid, polyvalent carboxylic acid containing no hydroxyl group, and a polyhydric alcohol, Patent document 3 discloses a hydrolysable polyester resin for an antifouling coating that is composed mainly of an aliphatic polyester comprising a metal salt of a hydroxyl carboxylic acid, and Patent document 4 discloses a polyester resin for an antifouling coating, having excellent coating suitability with an appropriate hydrolyzing rate, obtained by copolymerizing C2-40 dicarboxylic acids and C2-40 glycols with glycolic acid, lactic acid, caprolactone, or the like.

Also, Patent document 5 discloses an antifouling coating composition comprising a resin having an acid value of 20-400, a metal-containing antifouling agent and a monobasic acid compound having a carboxyl group, Patent document 6 discloses an antifouling coating composition comprising a hydrolysable polyester having carboxyl groups at both ends, Patent document 7 discloses an antifouling coating composition comprising a resin obtained by reacting an acrylic resin with a divalent or more -valent metal oxide, a polyester resin having an acid value of 50-200 mgKOH/g, and an antifouling agent, Patent document 8 discloses an antifouling anti-algae polyester-based resin composition obtained by adding an antifouling agent to a polybutylene terephthalate copolymer comprising polytetramethylene glycol and isophthalic acid as copolymerizing components, Patent document 9 discloses an antifouling coating comprising a biocide and a binder polymer which is hydrolysable with an acid functional polymer, and Patent document 10 discloses an antifouling coating comprising a hydrolysable self-polishing resin (an acrylic resin or polyester resin), cupric oxide, and copper pyrithione. Patent document 11 discloses an antifouling coating comprising a (meth) acrylic acid metal salt-based copolymer and a triphenylboron-amine complex, and Patent document 12 discloses an antifouling coating comprising a copolymer having a carboxyl group, a polyvalent metal compound, and an antifouling agent.

### Citation List

#### Patent Documents

[Patent document 1] Japanese Unexamined Patent Application Publication HEI No.7-166106
[Patent document 2] Japanese Unexamined Patent Application Publication No. 7-082513

[Patent document 3] Japanese Unexamined Patent Application Publication No. 8-176501
[Patent document 4] Japanese Unexamined Patent Application Publication No. 7-53899
[Patent document 5] Japanese Unexamined Patent Application Publication No. 9-132736
[Patent document 6] Japanese Unexamined Patent Application Publication No. 11-255869
[Patent document 7] Japanese Unexamined Patent Application Publication No.2000-248206
[Patent document 8] Japanese Unexamined Patent Application Publication SHO No.57-128742
[Patent document 9] Japanese Unexamined Patent Application Publication No. 2-196869
[Patent document 10] Japanese Unexamined Patent Application Publication No. 10-298455
[Patent document 11] Japanese Unexamined Patent Application Publication No. 11-323209
[Patent document 12] Japanese Unexamined Patent Application Publication No.W02007-074656

Summary of the Invention

Problem to be Solved by the Invention

Recently, from the viewpoint of environmental problems, it has been an important issue in the field of antifouling coatings how to reduce volatile organic compound (VOC) contents of coatings, in addition to providing prolonged antifouling performance (long-term antifouling properties) and reducing re-coating operations.
However, Patent documents 1-11 preferable above do not sufficiently research the issue on reducing the VOC. The research conducted by the present inventors has found that the conventional antifouling coatings employing polyester resins must be improved in the following aspects.
Specifically, in such conventional antifouling coatings, the resins having a viscosity suitable for coating (especially when the molecular weight of resins is high) must be produced by using a large amounts of solvent without exception. Consequently, the coating materials having a viscosity for practical use have high VOC contents, which is no longer environmental friendly.
On the other hand, a research has been conducted on how to lower the resin viscosity while reducing the usage of solvents.
One of the measures includes, for example, lowering the molecular weight of the polyester contained in coatings. In this measure, it is possible to reduce the organic solvent amounts in coatings, however, the hydrolysis rate in seawater grows too high, which disallows controlling the hydrolysis rate, thus, deteriorating the long-term antifouling property. In terms of a long-term antifouling property, a polyester resin for antifouling coating having polylactic acid, polyglycolic acid, etc. as monomers also cannot maintain the long-term antifouling property because of too high hydrolysis rate.
In a monomer component of a resin, it is also possible to lower the viscosity while reducing the solvent usage by increasing the component rate of the monomers (i.e., soft monomer) such as ethylacrylate having a function that lowers the resin viscosity and Tg for improving the flexibility. However, since the Tg of the resin containing a large amount of soft monomer as monomer component preferable above is low, the coating containing such a resin lowers the drying characteristic (coating strength) . Particularly, a coating comprising a resin having a low molecular weight and a high component percentage of soft monomer as a monomer component forms a coating film that is significantly hard to dry, has a low strength and is still sticky.
Patent document 8 discloses an aspect of an antifouling coating to be added with a polyester resin, cupric oxide, and a zinc flower, however, the coating is hard to say a hydrolysable coating and is difficult to keep the VOC value at a lower level.
The resin used for the coating composition of Patent document 10 forms an organic acid residue structure at the side-chain end, hence, a metallic cross-linked body is not formed. That is, the resin comprises relatively low molecular weight comparing to a resin having a metallic cross-linked structure. For that reason, a coating composition comprising this resin may be able to reduce the usage of solvents, lowers the VOC value, and maintain the coating workability to a certain degree. However, the composition uses polyester of low molecular weight, the hydrolysis rate in seawater becomes too high to control, still leaving a room for improvement with regard to the long-term antifouling property and coating film strength.
Patent document 11 discloses a coating composition free from copper compound in which a polymer having a metallic cross-linked structure is used as a resin. However, since the resin comprises a metallic cross-linked structure, the resin bears extremely high molecular weight comparing to a resin having no metallic cross-linked structure. That is, the viscosity of the resin is fundamentally high and the coating viscosity becomes even higher if the low VOC is intended.
Patent document 12 discloses a low VOC hydrolysable antifouling coating employing an acrylic resin, however, there is still a room for improvement in the viscosity of the coatings and the drying characteristic of the coating films.
The antifouling coating films containing copper or copper compound (especially cupric oxide) exhibit remarkable discoloration by ultraviolet ray and moisture. In addition to the discoloration, a crack may occur in the coating films when the coating films are exposed to ultraviolet ray and moisture for a long term. Especially, the crack poses a serious

problem, may lead to flaking, and thus, shortens the expected service year.

To eliminate such copper or copper compound related problems, an antifouling coating composition free from copper or copper compound is proposed, however such antifouling coating compositions are added with a large amount of various organic antifouling agents in order to maintain the antifouling property, which generated various problems including extremely high coating viscosity, low storage stability, and even deteriorated coating film hardness (strength). Therefore, it was difficult to realize a low VOC with one-part coating composition employing the conventional hydrolysis resin.

As mentioned above, the low VOC and the characteristics such as long term antifouling property establish a trade-off relation, a polyester antifouling coating, free from copper and copper compounds (especially, cupric oxide), that satisfies these characteristics at the same time has not been achieved yet.

As a result of the research on the above-mentioned problems of the prior art, the inventors of the present invention found that the adoption of the first component and the second component having a specific composition in the two-part hydrolysable antifouling coating composition will resolve the above-mentioned copper or copper compound related problems, maintain the coating film properties such as a long-term antifouling property, and realize low VOC which was extremely difficult with the conventional copper-compound-free composition.

The object is to provide: a two-part hydrolysable antifouling coating composition having such features as preventing discoloration due to ultraviolet ray or moisture and cracking by excluding copper or copper compound (e.g., cupric oxide), simultaneously maintaining a low VOC and a long-term antifouling property at a high level, and forming an antifouling coating film excellent in mechanical strength for a long-term; and a production method of an antifouling coating film and an antifouling substrate employing the two-part hydrolysable antifouling coating composition.

Means for Solving the Problem

The two-part hydrolysable antifouling coating composition comprises two liquids including: a first component containing a polyester resin having a solid content acid value of 50-200 mgKOH/g and a hydroxyl value of 100 mgKOH/g or less, and having a viscosity of 500 mPa·s or less at 25°C; and a second component in paste form containing a zinc oxide, and based on the total amount of the first and the second components, the content of volatile organic compound is 400g/L or less, and the components are free from copper and copper compound.

In the two-part hydrolysable antifouling coating composition of the present invention, the weight average molecular weight of the polyester resin, measured by the gel permission chromatography, is preferred to be 5,000 or less.

In the two-part hydrolysable antifouling coating composition of the present invention, the content of zinc oxide in the second component is preferred to be 10-500 parts by weight relative to 100 parts by weight of the polyester resin (solid content).

It is further preferred to contain rosin and/or a rosin derivative in the two-part hydrolysable antifouling coating composition of the present invention.

It is further preferred to contain an antifouling agent in the two-part hydrolysable antifouling coating composition of the present invention.

It is further preferred to contain a zinc pyrithione as an antifouling agent in the two-part hydrolysable antifouling coating composition of the present invention.

It is preferred to contain at least one plasticizer selected from a group consisting of a chlorinated paraffin, petroleum resins, ketone resins, tricresyl phosphate, polyvinyl ethyl ether, dialkyl phthalate, and (meth) acrylic polymers in the two-part hydrolysable antifouling coating composition of the present invention.

It is further preferred to contain an extender pigment (except for zinc oxide) in the two-part hydrolysable antifouling coating composition of the present invention.

It is further preferred to contain a pigment dispersant in the two-part hydrolysable antifouling coating composition of the present invention.

It is further preferred to contain a color pigment in the two-part hydrolysable antifouling coating composition of the present invention.

It is further preferred to contain a dehydrating agent in the two-part hydrolysable antifouling coating composition of the present invention.

The two-part hydrolysable antifouling coating composition of the present invention comprises two liquids as: a first component including a reaction mixture (A) having a polyester resin (a3) obtained by polycondensation of an acid component (a1) and a polyvalent alcohol component (a2); and a second component including a zinc oxide (B), the acid value and the hydroxyl value of the solid content in the reaction mixture (A) are 50-200 mgKOH/g and 100 mgKOH/g or less, respectively, copper and copper compound are substantially not included in the two-part hydrolysable antifouling coating composition, and the content of the volatile organic compound is 400 g or less per 1L of the two-part hydrolysable antifouling coating composition.

The antifouling coating film of the present invention is formed by hardening any of the above two-part hydrolysable antifouling coating compositions.

The antifouling method for substrate of the present invention comprises coating or impregnating any of the above two-part hydrolysable antifouling coating compositions onto a substrate, followed by hardening the substrate to form an antifouling coating film.

Also, the two-part hydrolysable antifouling coating composition of the present invention may be simply referred to as "two-part antifouling coating composition" or antifouling coating composition", in some cases. In addition, the term of "two-part hydrolysable antifouling coating composition" ("antifouling coating composition" or "two-part antifouling coating composition") may be used for indicating a state of storage or transportation without mixing the two components contained as well as a state of mixing the first and the second components in the two-part hydrolysable antifouling coating composition. Particularly, the latter mixing state is also referred to as "mixture coating". The two-part hydrolysable antifouling coating composition of the present invention obtained by mixing the above-mentioned first and second components (mixture coating) is applied on an object (substrate) to form an antifouling coating film.

The two-part hydrolysable antifouling coating composition of the present invention is a two-liquid type antifouling coating composition to be mixed and used with the above-mentioned first and second components, which forms a hydrolysable metallic cross-linked body by the reaction between a polyester resin component and a zinc oxide following to the mixing of the first component and the second component. Consequently, discoloration by ultraviolet ray and moisture is prevented and the VOC value can be greatly reduced without degrading the storage stability and coating workability to achieve a stable hydrolysis mechanism, resulting in a hydrolysable antifouling coating composition having a long-term coating film grindability.

In addition, the polyester resin contained in the first component is a high oxidation polyester resin, and by including the resin in the first component, the crosslinking reaction between a zinc ion and a carboxylic ion of a polyester resin is sufficiently improved when the first and second components are mixed, which improves such properties as coating film drying characteristic, coating film strength, coating film physicalities, and hydrolysis (self polishing characteristic and antifouling property). That is, the antifouling coating composition of the present invention maintains the antifouling property for a long-term and also can control drying characteristic and hydrolysis characteristic associated with the metallic crosslinking by controlling the acid value.

## Advantageous Effects of Invention

According to the present invention, it is possible to provide a low VOC high-solid type hydrolysable antifouling coating composition well-balanced in various performance aspects and capable of forming an antifouling coating film, which prevents discoloration by ultraviolet ray, moisture, or the like and cracking; reducing the environmental load and the impact on human body; and excels in coating operation, drying characteristic, long-term antifouling property (consumption property and stationary antifouling property), and mechanical strength regardless low VOC.

According to the invention, it is also possible to provide an antifouling coating film having an excellent long-term antifouling property and mechanical strength.

Furthermore, according to the present invention, it is possible to provide an antifouling method for substrate (production method of antifouling substrate), which can prevent fouling of substrate surfaces of underwater structures, ship outer platings, fishing nets, fishing gear, and the like for a long-term.

## Brief Description of the Drawings

Fig.1 is a illustration diagram showing the evaluation criteria in a coating film drying characteristic test (wood block pressing test) in the Examples.

## Description of the Preferred Embodiments

Preferred embodiments of the present invention will now be preferable in detail.

### [Two-part hydrolysable antifouling coating composition]

A two-part hydrolysable antifouling coating composition of the present invention is a two-part antifouling coating composition including the first component and the second component preferable below, in which the content of volatile organic compound is 400 g/L or less, and is 400 g or less per 1 L of the two-part hydrolysable antifouling coating composition, and excluding copper or copper compound.

A first component: a liquid including a polyester resin having a solid content acid value of 50-200 mgKOH/g and a hydroxyl value of 100 mgKOH/g or less, and preferably having a viscosity of 500 mPa·s or less at 25°C.

A second component: a liquid containing a zinc oxide (e.g., paste)

If the first component is a liquid including a reaction mixture (A) having a polyester resin (a3) prepared by polycondensation of an acid component (a1) and a polyvalent alcohol component (a2), the two-part hydrolysable antifouling coating composition of the present invention is a two-part antifouling coating composition consisting of the first and the second components preferable below, in which the content of a volatile organic compound is 400 g/L or less relative to the total amount of the first and second components (that is, 400 g or less per 1 L of the two-part hydrolysable antifouling coating composition), and substantially excluding copper or copper compound.

A first component: a liquid including a reaction mixture (A) having a polyester resin (a3) obtained by polycondensation of an acid component (a1) and a polyvalent alcohol component (a2).

A second component: a liquid containing a zinc oxide (B) The acid value and the hydroxyl value of the solid content in the reaction mixture (A) are 50-200 mgKOH/g and 100 mgKOH/g or less, respectively.

For forming a coating film on a substrate, the two-part hydrolysable antifouling coating composition of the present invention is used by mixing the first and the second components. In mixing the first and the second components, a reaction represented by the following formula may progress by the polyester resin (the polyester resin (a3) contained in the reaction mixture (A) if the first component includes a reaction mixture (A)) contained in the first component and the zinc oxide (B) contained in the second component.

Before the mixing, the polyester resin (the polyester resin (a3) contained in the reaction mixture (A) if the first component includes a reaction mixture (A)) contained in the first component includes a carboxyl group as a side chain (see (A) below). In the preparation of mixture coatings by mixing the first and the second components, an H of a carboxylic group in a particular polyester resin (the polyester resin (a3) contained in the reaction mixture (A) if the first component includes a reaction mixture (A)) removes to generate a carboxylic ion ($COO^-$) (see (B) below) . In addition, the carboxyl ion and a zinc oxide (B) derived from the second component undergo a cross-linking reaction as (C) below to form a hydrolysable metallic cross-linked body.

[Chemical formula 1]

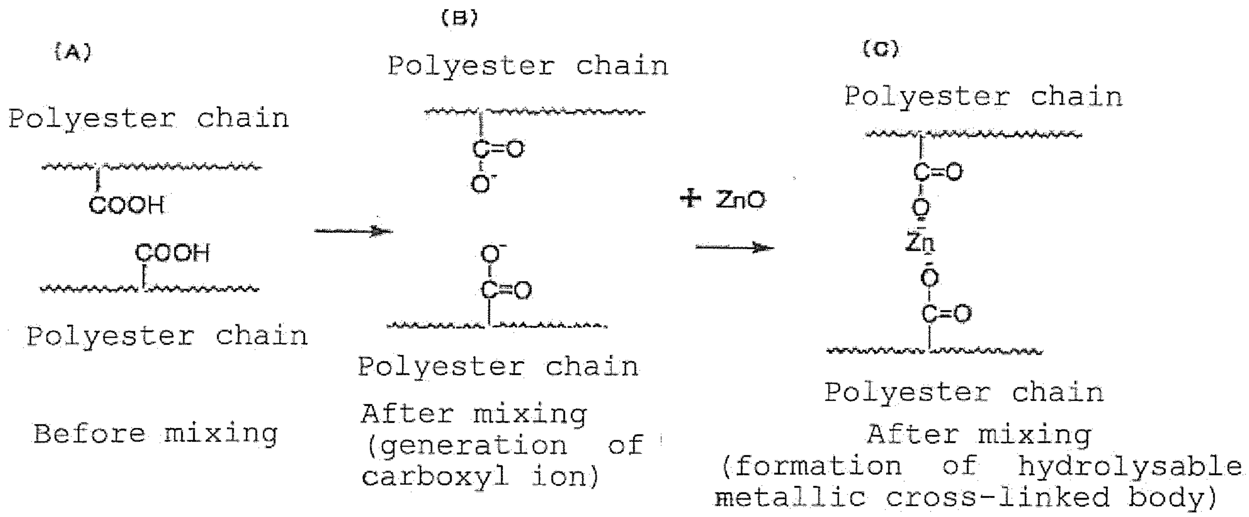


Chemical reaction formula (I)

As used herein, "free from copper and copper compound" represents "substantially free from copper and copper compound", and more particularly, it represents an aspect in which a two-part coating composition completely excluding copper or copper compound (content: 0 Wt%), and another aspect in which a mixture coating prepared by mixing the first and the second components contains very small amount of (e.g., 100 ppm or less, specifically 10-100 ppm) copper and/or copper compound so that discoloration by ultraviolet ray or moisture and generation of cracks on the coating films by long-term exposure to ultraviolet ray and moisture, and the like never occur. In regard to the latter aspect, the content of copper or copper compound depends on the condition that affects discoloration and generation of fine particles (e.g., temperature and pH), the content need be properly adjusted in accordance with the conditions. From the viewpoint of completely preventing the above-mentioned copper or copper compound related discoloration and the generation of cracks, it is preferred to exclude copper or copper compound (content: 0 Wt%).

From the viewpoint of favorable coating workability, the antifouling coating composition of the present invention

is preferred to have a 20 Poise (20 dPa·s) or less for the viscosity (viscosity of the mixture coating) (to be measured immediately after the preparation at 23 °C) of the coating prepared by mixing the first and the second components and is preferred to have 5-20 Poise (5-20 dPa·s) from the viewpoint of the room temperature coating workability, sufficient coating time (usable time), the prevention of flowing the coating, etc. The viscosity preferable herein is a value measured by using a Rion viscosimeter (RION CO., LTD VISCOTESTER VT-04F for high viscosity, 1st rotor) after adjusting the mixture coating to 23 °C.

The "solid content" of particular polyester resin ("polyester resin (solid content)") used herein represents a residue obtained by weighing 1g of the polyester resin on a flat bottom plate, spreading the resin evenly using a wire of known weight, and drying the resin for one hour at 125 °C. If the first component contains a reaction mixture (A), the subject for the solid content acid value and hydroxyl value can be the "solid content" of the reaction mixture (A) ("reaction mixture (A) (solid content)"). The "solid content" of the reaction mixture (A) represents a residue obtained by weighing 1g of the reaction mixture (A) on a flat bottom plate, spreading the mixture evenly using a wire of known weight, and drying the mixture for one hour at 125 °C.

The "acid value of the solid content" and the "hydroxyl value of the solid content" in the polyester resin (the reaction mixture (A) when the first component contains the reaction mixture (A)) may be simply referred to as "solid content acid value" and "solid content hydroxyl value".

Below explains each component.

[First component]

A first component of a two-part hydrolysable antifouling coating composition of the present invention contains a polyester resin having a solid content acid value of 50-200 mgKOH/g and a hydroxyl value of 100 mgKOH/g or less, and having a viscosity of 500 mPa·s or less at 25°C.

Specifically, the first component is a liquid including a reaction mixture (A) as an essential component that contains a polyester resin (a3) prepared by polycondensation of an acid component (a1) and a polyvalent alcohol component (a2).

The first component may include any component preferable later in accordance with a purpose desired. However, it is preferable that the first component substantially does not contain a ZnO in order not to form a hydrolysable metallic crosslinked body in the first component before being mixed with the second component. The statement "substantially does not contain a ZnO" preferable herein represents that a minimum amount of ZnO can be allowed to contain in the first component unless the workability remarkably deteriorates when mixing the first and second components for coating even if the viscosity of the first component rises by the hydrolysable metallic cross-linked body formed by ZnO. It is more preferable that the first component is free from ZnO in the first component in order to completely prevent forming a hydrolysable metallic cross-linked body before being mixed with the second component.

<Polyester resin and reaction mixture (A)>

The polyester resin contained in the first component can be prepared by polycondensation of the acid component (a1) and the polyhydric alcohol component (a2).

The reaction mixture (A) allowed to be contained in the first component includes a preparation obtained by polycondensation of the acid component (a1) and the polyhydric alcohol component (a2), which includes a polyester resin (a3), and in many cases, includes a unreacting monomer ((a1) and (a2)), oligomer, solvent, catalyst, or the like. The reaction mixture (A) is usually used as a first component directly.

The acid component (a1) is not particularly limited to any as long as the component is a polybasic acid (divalent or more-valent carboxylic acid), alkyl ester thereof, or acid anhydride thereof, the polybasic acid includes two or more carboxyl groups in one molecule, the carboxyl group performs polycondensation reaction with the OH group of the polyhydric alcohol component (a2) preferable later.

The acid component (a1) includes: an aromatic dicarboxylic acid such as a terephthalic acid, isophthalic acid, phthalic acid, and naphthalene dicarboxylic acid; an aliphatic carboxylic acid such as an adipic acid, sebacic acid, azelaic acid, succinic acid, haimicc acid, 1, 6-cyclohexane carboxylic acid; a carboxylic acid of trivalent or more -valent (polybasic acid) such as a trimellitic acid and pyromellitic acid; a low alkyl ester thereof (e.g., C1-C4 alkyl ester); or an acid anhydride of these.

The dibasic acids such as an aromatic dicarboxylic acid and a saturated aliphatic dicarboxylic acid may be used in one type alone or two types or more. Moreover, a trivalent or more -valent polybasic acid may be used in one type alone or two types or more.

A polyhydric alcohol component (a2) represents an alcohol (bivalent or more -valent) having two or more hydroxyl groups (OH groups) in one molecule.

A polyhydric alcohol component (a2) includes: an ethylene glycol, propylene glycol, 1,2-propanediol, 1,3-propanediol, 1,3-butanediol, 1,4-butanediol, neopentyl glycol, 1,5-pentanediol, 1,6-hexanediol, 3-methy pentanediol, diethylene glycol, 1,4-cyclohexanedimethanol, 3-methyl-1,5-pentanediol, 2-methyl-1,3-propanediol, 2,2-diethyl-1,3-propanediol, 2-butyl-2-ethyl-1,3-propanediol, hydrogenated bisphenol A, ethylene oxide addition product or propylene oxide addition product for bisphenol A, bivalent or more -valent polyhydric alcohol such as trimethylolethane, trimethylolpropan, glycerins, and pentaerythritols. These polyhydric alcohol components (a2) may be used in one type alone or two types or more. A hydroxyl acid such as dimethylol propionic acid can be subjected to a polycondensation reaction with the above-mentioned acid component (a1) and polyhydric alcohol component (a2).

A monocarboxylic acid such as benzoic acid and p-t-butyl benzoic acid can be subjected to a polycondensation reaction with the acid component (a1) and polyhydric alcohol component (a2).

From the viewpoint of exhibiting an excellent reactivity with a zinc oxide (a hydrolysable metallic cross-linked body can be formed easily) in spite of difficulty in viscosity rise when mixing the first and second components, the content of a constitutional unit derived from the above-mentioned acid component (a1) in the polyester resin (the polyester resin (a3) if the first component includes a reaction mixture (A)) (100 weight %) contained in the first component is preferred to be 5-95 weight %, further preferred to be 10-90 weight %, and still further preferred to be 20-80 weight %.

The content of a constitutional unit derived from the above-mentioned polyhydric alcohol component (a2) in the polyester resin (the polyester resin (a3) if the first component includes the reaction mixture (A)) (100 weight %) contained in the first component is preferred to be 5-95 weight %, further preferred to be 10-90 weight %, and still further preferred to be 20-80 weight %.

In preparation of polyester resin, as the preparation is performed by proceeding a polycondensation reaction (esterification reaction or transesterification), the above-mentioned acid component (a1) and a polyhydric alcohol component (a2) are mixed, and well-known production method such as a fusion method, and a solvent method using toluene, xylene or others (reflux method) is suitably adopted. Under the condition of reduced pressure and in 200-300°C, the polycondensation reaction is performed with uncatalyzation or under the presence of a catalyst such as antimony trioxide, germanium oxide, and N-butyl titanate.

The viscosity of the reaction mixture (A) (immediately after preparation) at 25°C is preferred to be 500mPa·s or less, further preferred to be 100-500mPa·s, and still further preferred to be 200-400mPa·s. If the viscosity exceeds 500mPa·s, it is difficult to exhibit a favorable coating workability even maintaining the content of the volatile organic compound (VOC) at a low level, for example, 400g or less per 1L of a two-part hydrolysable antifouling coating composition. The viscosity (mPa·s) of the above-mentioned polyester resin (A) at 25°C is a value measured with E type viscometer (Toki Sangyo Co., Ltd, Model No. TV-22 viscometer) at 25°C.

It is preferable that the polyester resin contained in the first component includes polyester resin having a weight average molecular weight (Mw) of 5,000 or less. If the first component includes the reaction mixture (A), it is preferable that the reaction mixture (A) includes a polyester resin (a3) having a weight average molecular weight (Mw) of 5,000 or less. The weight average molecular weight is preferred to be 4,000 or less, and is further preferred to be 3, 000 or less. If the weight average molecular weight exceeds 5,000, the viscosity of the polyester resin becomes high, and becomes excessively high when mixing the first and the second components. That is, for an excellent coating workability, the viscosity must be lowered with solvents, which tends to increase the VOC amount. Therefore, it is preferable that the weight average molecular weight is 5,000 or less. If it is less than 500, the coating film becomes still sticky after drying because of the low molecular weight, so that the weight average molecular weight is preferred to be 500 or more.

The weight average molecular weight of the polyester resin is a value measured by the gel permeation chromatography (GPC) using a standard polystyrene calibration curve based on the following condition.

⟨GPC condition⟩

Pump: manufactured by Hitachi L-6200
Column: Hitachi Chemical Gel Pack GL-420, GL-430, and GL-440 Eluent solvent: Tetrahydrofuran

The solid content acid value of the polyester resin is 50-200 mgKOH/g, and is preferred to be 80-150 mgKOH/g, and still further preferred to be 90-110 mgKOH/g. If the first component includes the reaction mixture (A), the above-mentioned solid content hydroxyl value is the solid content hydroxyl value of the reaction mixture (A). That is, the solid content acid value of the reaction mixture (A) is 50-200 mgKOH/g, and is preferred to be 80-150 mgKOH/g, and is still further preferred to be 90-110 mgKOH/g. If the above-mentioned solid content acid value is less than 50 mgKOH/g, the drying characteristic of the coating film deteriorates because of the slow reaction between the polyester (a3) and the zinc oxide (a hydrolysable metallic cross-linked body is difficult to form) when mixing the first and the second components. If the above-mentioned solid content acid value exceeds 200 mgKOH/g, such a defect as coating film crack occurs. The above-mentioned solid content acid value can be measured by a titration with potassium hydroxide (KOH).

The solid content hydroxyl value of the polyester resin is 100 mgKOH/g or less, and is preferred to be 50 mgKOH/g or less, and still further preferred to be 20 mgKOH/g, and is most preferred to be 10 mgKOH/g or less. If the first component includes the reaction mixture (A), the above-mentioned solid content hydroxyl value is the solid content hydroxyl value of the reaction mixture (A). That is, the solid content hydroxyl value of the reaction mixture (A) is 100 mgKOH/g or less, and is preferred to be 50 mgKOH/g or less, and still further preferred to be 20 mgKOH/g or less, and is most preferred to be 10 mgKOH/g or less. If the above-mentioned solid content hydroxyl value exceeds 100 mgKOH/g, and if rosin or a petroleum resin is contained, the compatibility between these components and the polyester resin (a3) declines, and when a coating film is formed, the appearance and the water resistance for the coating film deteriorate.

Each of the above-mentioned solid content acid values can be adjusted to each numerical value within the above range employing known means.

For example, these include: an acid end polyester obtained by introducing an acid to the polyester resin (the polyester resin (a3) contained in the reaction mixture (A) when adjusting the solid content acid value of the reaction mixture (A)) at its end using a dibasic acid; and a polybasic acid degeneration polyester obtained by degenerating a polyester resin using a polybasic acid.

Such an acid end polyester, for example, is prepared by mixing a dibasic acid and a bivalent alcohol, and running on a polycondensation reaction (esterification reaction or transesterification). The above-mentioned polybasic acid degeneration polyester, for example, is prepared by introducing a polybasic acid (trimellitic anhydride and others) to the main chain of the polyester to produce degeneration with the polybasic acid after synthesizing the polyester. A preparation method for a polybasic acid degeneration polyester also includes introducing a polybasic acid to the main chain at the same time the polycondensation reaction between the acid and alcohol components, however, the method for adding a polybasic acid to the polyester main chain after synthesizing the polyester results in more reduced gels and thickenings, which is easier to regulate the reaction. It is allowed to introduce a polybasic acid such as a trimellitic anhydride or the like alone, however, the viscosity tends to rise because of higher polarity due to the increased localization of carboxyl group. Therefore, it is further preferred to use a monocarboxylic acid, a dicarboxylic acid, and a polybasic acid together.

To make the above-mentioned solid content hydroxyl value to 100 mgKOH/g or less, it is possible to adjust the number of OH group by adjusting the mixing ratio of the monomer component of the polyester resin (for example, (a1), (a2), or any other monomer component used for the preparation of the reaction mixture (A) if the first component includes the reaction mixture (A)), and also possible by adding a monocarboxylic acid after polycondensation reaction and reacting the OH group of the polyester resin with the carboxylic group of the carboxyl acid.

Because of low viscosity, the hydroxyls tend to increase by lowering the molecular weight of the polyester resin, however, the hydroxyl value can be adjusted by reacting a hydroxyl and a carboxyl group such as monocarboxylic acid using a monocarboxylic acid such as benzoic acid when preparing a polyester resin. For example, if the first component contains the reaction mixture (A), the hydroxyl value can be adjusted by putting a monocarboxylic acid such as benzoic acid subjected to a polycondensation reaction together with (a1) and (a2) in order to cause the hydroxyl to react with a carboxyl group such as monocarboxylic acid when preparing the reaction mixture (A).

[Second component]

A second component of a two-part hydrolysable antifouling coating composition of the present invention is a liquid (e.g., a paste) including a zinc oxide (also referred to as zinc oxide (B)) and may further contain any component preferable later as required.

The zinc oxide contained in the second component is an active pigment, and if the first and the second components are mixed, the zinc oxide functions as a hardener in that the zinc oxide reacts with a carboxyl group of a polyester resin (polyester resin (a3) when the first component contains the reaction mixture (A)) as above chemical equation (I) to form a metallic salt cross-linking, thus, functioning as a hardener.

When the zinc oxide reacts with the carboxylic group of the polyester resin, a -COO- group (carboxyl ion) which is a residue of the carboxylic group of the polyester resin from which an hydrion is removed, is formed, and a hydrolysable metal salt cross-linked body (e.g., -CCO· $\cdot Zn^{2+}\cdot$ ·OOC-) is formed by the metal ion $Zn^{2+}$ derived from the zinc oxide (B). The hydrolysable metallic salt cross-linked body hydrolyzes easily and exhibits stable hydrolysis reaction (low fluctuation of hydrolysis rate with time). That is, the coating composition of the present invention can form a coating film that demonstrates a long-term coating film grindability (excellent in long-term (antifouling). By adopting a two-part reaction type, even under a low temperature, and even if the content of volatile organic compound is set to 400g or less per 1L of the two-part hydrolysable antifouling coating composition, a coating viscosity practical for coating (excellent in coating operation) can be maintained.

For the presence or absence of the reaction between a zinc ion derived from the zinc oxide contained in the second component and a carboxyl group of a polyester resin, for example, it may be confirmed by checking the change of the coating hue before and after the mixing of the first and second components, or could be confirmed by the increase

of viscosity the mixed coating with time.

Various particle sizes are used for the zinc oxide (B) contained in the second component. Rather than using a zinc oxide having a large particle size, using a fine particle zinc oxide whose particle size is 1μm or less such as an active zinc oxide facilitates a crosslinking reaction (a reaction for forming a hydrolysable metallic salt cross-linked body) between the carboxyl group of the polyester resin and the zinc ion derived from a zinc oxide (B), which is preferable in that it improves the coating film hardness in a short time, and exhibits a damage-resistance property of the coating film at an early stage.

The content of the zinc oxide in the second component is preferred to be 10-500 parts by weight, and is further preferred to be 50-300 parts by weight, relative to solid content of 100 parts by weight of the polyester resin contained in the first component. If the first component contains the reaction mixture (A), the content of the zinc oxide in the second component is preferred to be 10-500 parts by weight, and is further preferred to be 50-300 parts by weight, relative to the solid content of 100 parts by weight of the reaction mixture (A). If the content is less than 10 parts by weight, the coating property such as hardenability and coating film strength tends to deteriorate, and if the content exceeds 500 parts by weight, the coating property tends to be poor because of generation of cracking and the like.

[Optional components]

Below explains optional components. An optional component may be mixed into a first component and/or a second component, or may be added to a coating being mixed with the first and second components, or the resultant coating mixed with the first and second components.

<(C) Rosin and rosin derivative>

From the viewpoint of preferable conformity with pigment components that leads to the improvement of liquidity and lower viscosity, and that of a long time maintainability of antifouling property in that an antifouling agent (D) can be eluted smoothly on a coating film formed by the antifouling coating composition provided that the antifouling coating composition contains an antifouling agent (D) preferable later, the antifouling coating composition of the present invention may further include rosin and/or a rosin derivative (C). Rosin includes gum rosin, wood rosin, toll rosin, and the like. A rosin derivative includes hydrogenation rosin, polymerization rosin, rosin maleate, aldehyde degeneration rosin, rosin metal salt, rosin amine, and the like. Rosin and/or rosin derivative can be used in one type, or in combination with two or more types. Rosin and/or a rosin derivative (C) may be contained in the first or second component, or added into a compound having the first and second components mixed, however, it is preferred to be added into the second component.

The content of the rosin and/or the rosin derivative is preferred to be 0.5-300 parts by weight, and is further preferred to be 0.5-200 parts by weight, and is most preferred to be 0.5-150 parts by weight relative to the solid content of 100 parts by weight of polyester resin contained in the first component.

If the first component includes the reaction mixture (A), the content of the rosin and/or the rosin derivative is preferred to be 0.5-300 parts by weight, and is further preferred to be 0.5-200 parts by weight, and is most preferred to be 0.5-150 parts by weight relative to the solid content of 100 parts by weight of the reaction mixture (A).

If the above-mentioned content is less than 0.5 parts by weight, the coating viscosity tends to rise, and if the content exceeds 300 parts by weight, the coating property tends to deteriorate because of occurrence of cracking and the like.

<(D) Antifouling agent>

The antifouling coating composition of the present invention may further contain an antifouling agent (however, excluding a copper compound such as copper and cuprous oxide; hereinafter referred to as antifouling agent (E)"). The antifouling agent (D) is not especially limited to any as long as the agent excludes a copper and a copper compound, and both organic and inorganic antifouling agents are accepted. For example, as an antifouling agent (D), the following substances may be used: metallic pyrithiones such as zinc pyrithione; 4,5-dichloro-2-n-octyl-4-isothiazoline-3-one; 2-methylthio-4-t-butylamino-6-cyclopropylamino-s-triazine; 2-(p-chlorophenyl)-3-cyano-4-bromo-5-trifluoromethylpyrrole; N,N'-dimethyl-N'-tolyl-(N-fluorodichloromethylthio) sulfamide; and pyridine-triphenylborane. Considering an antifouling property in stationary condition, the following substances are preferred to use as an antifouling agent (D) : zinc pyrithione; 4,5-dichloro-2-n-octyl-4-isothiazoline-3-one; 2-methylthio-4-t-butylamino-6-cyclopropylamino-s-triazine; and 2-(p-chlorophenyl)-3-cyano-4-bromo-5-trifluoromethyl pyrrole. Considering a long-term antifouling property to animal species especially such as barnacles, it is preferred to combine 2-(p-chlorophenyl)3-cyano-4-bromo-5-trifluoromethylpyrrole and another antifouling agent (D) excluding that substance. It is preferred to contain an antifouling agent (D) in the second component.

In the antifouling coating composition of the present invention, the content of the antifouling agent (D) is preferred

to be 5-600 parts by weight, and is further preferred to be 10-500 parts by weight, relative to solid content of 100 parts by weight of polyester resin contained in the first component.

If the first component contains the reaction mixture (A), the content of the antifouling agent (D) is preferred to be 5-600 parts by weight, and is further preferred to be 10-500 parts by weight, relative to the solid content of 100 parts by weight of the reaction mixture (A).

From the viewpoint of possibility of improving the coating film hardness (strength) while controlling the coating viscosity rise, the antifouling agent (D) of the antifouling coating composition of the present invention is preferred to be zinc pyrithione. In this case, the content of the zinc pyrithione is preferred to be 0.5-300 parts by weight, and is further preferred to be 1-200 parts by weight, and is most preferred to be 10-200 parts by weight relative to the solid content of 100 parts by weight of polyester resin contained in the first component.

If the first component includes the reaction mixture (A), it is preferred to be 0.5-300 parts by weight, and is further preferred to be 1-200 parts by weight, and is most preferred to be 10-200 parts by weight relative to the solid content of 100 parts by weight of the reaction mixture (A). From the viewpoint of improving the coating film hardness (strength), the substances are preferred in the following order: zinc pyrithione and 2-(p-chlorophenyl)3-cyano-4-bromo-5-trifluoromethyl pyrrole. From the viewpoint of exhibiting the drying characteristic of the mixture coating, the strength of the coating film formed, and favorable antifouling property against both animal species such as barnacles and botanical marine organisms, it is further preferred to use a zinc pyrithione and a 2-(p-chlorophenyl)3-cyano-4-bromo-5-trifluoromethylpyrrole together.

<(E) Other additives>

The antifouling coating composition of the present invention may include at least one of the additives (hereinafter referred to as "additive (E)") selected from the group consisting of a plasticizer (e1), extender pigment (e2), pigment dispersant (3), color pigment (e4), dehydrating agent (e5), anti-sagging agent (e6), and anti-settling agent (e7). The additive (E) may be contained in the first or second component, or added into a compound having the first and second components mixed, however, it is preferred to be added into the second component.

Below explains the plasticizer (e1), extender pigment (e2) (however, excluding zinc oxide), pigment dispersant (e3), color pigment (e4), dehydrating agent (e5), anti-sagging agent (e6), and anti-settling agent (e7).

<u>(e1) Plasticizer</u>

A plasticizer (e1) includes a chlorinated paraffin, petroleum resins, ketone resins, TCP (tricresyl phosphate), polyvinyl ethyl ether, dialkylphthalate, (meth) acrylic polymers, and the like. If the antifouling coating composition of the present invention includes the plasticizer (e1), it is preferable in that the anti-crack property of the coating film (antifouling coating) formed from the antifouling coating composition is improved.

Of these, the plasticizer (e1) is preferred to be a plasticizer selected from a group consisting of a chlorinated paraffin, petroleum resins, ketone resins, and (meth) acrylic polymers. These plasticizers can be used in one type, or in combination with two or more types.

The content of the plasticizer (e1) is preferred to be 0.1-300 parts by weight, and is further preferred to be 0.1-200 parts by weight, and is most preferred to be 0.1-150 parts by weight relative to the solid content of 100 parts by weight of polyester resin contained in the first component.

If the first component includes the reaction mixture (A), the content of the plasticizer (e1) is preferred to be 0.1-300 parts by weight, and is further preferred to be 0.1-200 parts by weight, and is most preferred to be 0.1-150 parts by weight relative to the solid content of 100 parts by weight of the reaction mixture (A).

[Chlorinated paraffin]

The chlorinated paraffin may be linear or branched structure, and may be liquid or solid (fine particle) form at room temperature.

The average number of carbons in a chlorinated paraffin is normally 8-30, and preferably is 10-26. A chlorinated paraffin having such number of carbons produces an antifouling coating composition that forms a coating film with fewer cracks and peelings. If the number of carbons of the chlorinated paraffin is less than eight, the crack inhabiting effect may be inadequate, on the other hand, if it is more than 30, the resultant coating film surface may have a deteriorated consumption property (renewal property) that may lead to a deteriorated antifouling property.

The number average molecular weight of a chlorinated paraffin: is normally to be 200-1,200, and is preferred to be 300-1,100; the viscosity is normally to be 1 or more (poise/25°C), and is preferred to be 1.2 or more (poise/25°C) ; and the specific gravity is normally to be 1.05-1.80/25°C, and is preferred to be 1.10-1.70/25°C.

The chlorination rate of a chlorinated paraffin (chlorine content) is normally to be 35-75%, and is preferred to

be 35-65%. A chlorinated paraffin having such a chlorination rate produces an antifouling coating composition that forms a coating film with fewer cracks and peelings. Commercially available such chlorinated paraffin includes a "TOYOPARAX 150" and "TOYOPARAX A-70" manufactured by TOSOH CORPORATION. Specifically, as petroleum resins, C5, C9, styrenic, and dicyclopentadiene -based resins, and their hydrogenated materials may be used, and their commercially available products include "Quintone 1500" and "Quintone 1700" manufactured by ZEON CORPORATION.

[(Meth) acrylic polymer]

A (meth) acrylic polymer contained as a plasticizer (e1) is preferred to be a (meth) acrylic polymer compatible with a polyester resin (a3) contained in the reaction mixture (A).

The (meth) acrylic polymer compatible with the polyester resin herein represents a (meth) acrylic polymer that produces a transparent homogeneous solution or a milk-white homogeneous solution instead of forming a two-liquid solution layer when mixing the following xylene solutions at a rate of 1: 1 at 25°C as: a xylene solution having a 30 weight % of the polyester resin; and a xylene solution having a 30 weight % of the polymer derived from the (meth) acrylic acid.

By containing the (meth) acrylic polymer compatible with the polyester resin, the antifouling coating composition produces a coating film excellent in anti-crack property, reduces seawater consumption rate of the coating film, and maintains the antifouling property, thus, the durability can be adjusted in a suitable range. There is also an advantage in that the adhesive property of the coating film can be further improved if the antifouling coating composition of the present invention is applied over an existing antifouling coating film.

Such a (meth) acrylic polymer compatible with a polyester resin include: a (meth) acrylic ester homopolymer or copolymer; (meth) acrylic ester homopolymer; at least two types of (meth) acrylic acid ester copolymer; (meth) acrylic ester·(meth) acrylic acid copolymer; and a (meth) acrylic ester·styrenic-based copolymer. Such a (meth) acrylic ester-based polymer may be used in one type, or in combination with two or more types. These (meth) acrylic polymers may be linear or branched structure, and may have a crosslinking structure. Specific examples of (meth) acrylic polymer compatible with polyester resin include, (meth) acrylic acid, (meth) methyl acrylate, (meth) ethyl acrylate, (meth) butyl acrylate, (meth) isobutyl acrylate, (meth) t-butyl acrylate, (meth) acrylic acid cyclohexyl, (meth) phenyl acrylate, and a homopolymer of (meth) acrylic ester such as (meth) acrylic acid2-acetoacetoxyethyl or a copolymer of these monomers; an aromatic vinyl compound such as styrene (ST); a copolymer of various monomers such as a vinyl acetate, vinyl chloride, ethylene, propylene, butadiene, and vinyl ether compound, and a (meth) acrylic ester-based monomer.

Further, specific (meth) acrylic polymer compatible with polyester resin includes the following polymers:

(1) a copolymer of a methyl methacrylate (MMA), ethyl acrylate (EA), and acrylic acid (AA), whose copolymerization ratio (represented by weight ratio of each component, the same shall apply hereinafter) as (MMA/EA/AA) is (total in all the components: 100 parts by weight), and the number average molecular weight is preferred to be 1,000-20,000 and is further preferred to be 1,000-5,000.

(2) a copolymer of a methyl methacrylate (MMA), ethyl acrylate (EA), and butyl acrylate (BA), whose copolymerization ratio (represented by weight ratio of each component, the same shall apply hereinafter) as (MMA/EA/BA) is 35-50/20-60/10-50 (total in all the components: 100 parts by weight), and the number average molecular weight is preferred to be 1,000-20, 00, and is further preferred to be 1,000-10,000.

(3) a copolymer of a isobutyl methacrylate (i-BMA), t-Butyl methacrylate (t-BMA), styrene (ST), and stearyl methacrylate (SLMA), whose copolymerization ratio as (i-BMA/t-BMA/ST/SLMA) is 10-40/10-40/20-60/5-20 (total in all the components:100 parts by weight), and the number average molecular weight is 1,000-100,000 and is preferred to be about 1,000-80,000.

(4) a homopolymer of a methyl methacrylate (MMA), whose number average molecular weight is 1, 000-100, 000 and is further preferred to be about 1,000-20,000.

(5) a homopolymer of an ethyl methacrylate (EMA), whose number average molecular weight is 1,000-100,000 and is preferred to be about 1,000-20,000.

(6) a copolymer of a methyl methacrylate (MMA), and butyl acrylate (BA), whose copolymerization ratio as (MMA/BA) is 99-50/1-50 (total in all the components:100 parts by weight), and the number average molecular weight is 1,000-100,00 and is preferred to be about 1,000-50,000.

(7) a copolymer of a ethyl methacrylate (EMA) and butyl acrylate (BA), whose copolymerization ratio as (EMA/BA) is 100-70/0-30 (total in all the components: 100 parts by weight), and the number average molecular weight is 1,000-100,000 and preferred to be about 1,000-30,000.

Among such (meth) acrylic polymers, a hydrophobic acrylic polymer (e.g., the one whose (meth) acrylic acid ester content exceeds 50 weight % and styrene content is less than 50 weight %) or styrene-based polymer (e.g., the one whose styrene content is more than 50 weight %) is preferred to be used, and the (meth) acrylic ester polymer of the above-mentioned (1)-(2), is especially preferred to be used.

The number average molecular weight of such (meth) acrylic polymer is preferred to be 1,000-20,000 and is further preferred to be 1,000-10,000, and is especially preferred to be 1,000-3,000. If the number average molecular weight of the (meth) acrylic polymer is within the above range, the polishing degree can be effectively adjusted and an antifouling coating film excellent in stationary antifouling property tend to be formed. If the number average molecular weight of the (meth) acrylic polymer exceeds the range shown above, the rise of the coating viscosity and the reduction effect on the polishing degree of the antifouling property are obtained, however, the stationary antifouling property tends to decrease, and if the molecular weight of the above (meth) acrylic polymer exceeds the range shown above, even the antifouling property of the resultant antifouling coating film may be maintained at a high level, the drying characteristic and the coating film strength may be unacceptable.

From the viewpoint of preventing the viscosity from rising, the content of the (meth) acrylic polymer is preferred to be 0.1-100 parts by weight, and is further preferred to be 0.1-80 parts by weight, and is particularly preferred to be 0.1-50 parts by weight relative to the solid content of 100 parts by weight of the polyester resin contained in the first component.

If the first component includes the reaction mixture (A), the content of the (meth) acrylic polymer is preferred to be 0.1-100 parts by weight, and is further preferred to be 0.1-80 parts by weight, and is particularly preferred to be 0.1-50 parts by weight relative to the solid content of 100 parts by weight of the reaction mixture (A).

The (meth) acrylic polymer is preferred to be contained in the first component from the viewpoint of storage stability.

The average molecular weight (weight average molecular weight and number average molecular weight) of the above-mentioned chlorinated paraffin and (meth) acrylic polymer is a value calculated by using a gel permeation chromatography (GPC) method under the following GPC condition, and a standard polystyrene calibration curve.

(GPC measurement condition)

Device: manufactured by Hitachi L-6200
Column: Hitachi Chemical Gelpack GL-420, GL-430, and GL-440
Eluent: THF
Flow velocity: 2.0ml/min

<u>(e2) Extender pigment</u>

An extender pigment (e2) includes (however, zinc oxide is excluded): talc, silica, mica, clay, potash feldspar, calcium carbonate also used as anti-settling agent, kaolin, alumina white, white carbon used as matted medicine, aluminum hydroxide, magnesium carbonate, barium carbonate, barium sulfate, and the like, and among these, an extender pigment selected from a group consisting of talc, silica, mica, clay, calcium carbonate, kaolin, barium sulfate, and potash feldspar is preferred. An extender pigment is a pigment with a low refractive index, and becomes transparent when mixed with oil or varnish to avoid concealing of the coating surface, and if the antifouling coating composition of the present invention contains the extender pigment (e2), it is preferred from the viewpoint of improving the coating film property such as anti-cracking property.

The content of the extender pigment (e2) is preferred to be 0.1-500 parts by weight, and is further preferred to be 50-300 parts by weight, relative to the solid content of 100 parts by weight of the polyester resin contained in the first component.

If the first component contains the reaction mixture (A), the content of the extender pigment (e2) is preferred to be 0.1-500 parts by weight, and is further preferred to be 50-300 parts by weight, relative to the solid content of 100 parts by weight of the reaction mixture (A).

<u>(e3) Pigment dispersant</u>

Various well-known organic and inorganic pigment dispersants may be used for the pigment dispersant (e3) . Organic pigment dispersant includes an aliphatic amine or organic acids ("Duomeen TDO" manufactured by Lion Co., Ltd. DISPERBYK-101 manufactured by BYK CHEMIE), and the like.

The content of the pigment dispersant (e3) is preferred to be 0.01-100 parts by weight, and is further preferred to be 0.01-50 parts by weight, relative to the solid content of 100 parts by weight of the polyester resin contained in the first component.

If the first component contains the reaction mixture (A), the content of the pigment dispersant (e3) is preferred to be 0.01-100 parts by weight, and is further preferred to be 0.01-50 parts by weight, relative to the solid content of 100

parts by weight of the reaction mixture (A).

(e4) Color pigment

Various well-known organic and inorganic color pigments may be used for the color pigment (e4). An organic pigment includes a carbon black, naphthol red, and phthalocyanine blue, and the like. An inorganic pigment includes, for example, a blood red, baryta powder, white titanium pigment, yellow oxide, and the like. Various coloring agents such as dyes may be included. If the antifouling coating composition of the present invention includes a color pigment (e4), it is preferable in that the hue of the antifouling coating film formed from the composition can be freely adjusted.
The content of the color pigment (e4) is preferred to be 0.01-100 parts by weight, and is further preferred to be 0.01-10 parts by weight, relative to the solid content of 100 parts by weight of the polyester resin contained in the first component.
If the first component contains the reaction mixture (A), it is preferred to be 0.01-100 parts by weight, and is further preferred to be 0.01-10 parts by weight, relative to the solid content of 100 parts by weight of the reaction mixture (A).

(e5) Dehydrating agent

A dehydrating agent (e5) includes an anhydrite gypsum (CaSO4), casting plaster, synthetic zeolite-based absorbent (product name: Molecular Sieve 3A, 4A, 5A, 13X and the like), and inorganic dehydrating agent such as ethyl silicate. Of these, the gypsum and the casting plaster are preferred because of high dehydrating effect. Since a dehydrating agent further improves the storage stability and the adhesion of antifouling coating composition, such inorganic dehydrating agent can be used alone or in combination with two or more types.
The content of the dehydrating agent (e5) is preferred to be 0.1-100 parts by weight, and is further preferred to be 0.1-50 parts by weight, and is most preferred to be 0.1-20 parts by weight relative to the solid content of 100 parts by weight of polyester resin contained in the first component.
If the first component includes the reaction mixture (A), it is preferred to be 0.1-100 parts by weight, and is further preferred to be 0.1-50 parts by weight, and is most preferred to be 0.1-20 parts by weight relative to the solid content of 100 parts by weight of the reaction mixture (A).

(e6) Anti-sagging agent

An anti-sagging agent (e6) (also called "anti-running agent") includes an amide wax, hydrogenation castor oil-basted wax, polyamide-based wax, a mixture of both, and synthesized finely-divided silica, and among these, the polyamide-based wax and synthesized finely-divided silica are preferred. The commercial available products include: "DISPARLON A630-20XC" manufactured by KUSUMOTO CHEMICALS, CO., LTD. and "ASAT-250F" manufactured by ITO OIL CHEMICALS CO., LTD. If the antifouling coating composition of the present invention includes an anti-sagging agent (e6), it is preferable in that the anti-running property for coating operation, or the like can be adjusted.
The content of the anti-sagging agent (e6) is preferred to be 0.1-100 parts by weight, and is further preferred to be 0.1-50 parts by weight, relative to the solid content of 100 parts by weight of the polyester resin contained in the first component.
If the first component contains the reaction mixture (A), it is preferred to be 0.1-100 parts by weight, and is further preferred to be 0.1-50 parts by weight, relative to the solid content of 100 parts by weight of the reaction mixture (A).

(e7) Anti-settling agent

An anti-settling agent (e7) includes an organoclay Al, Ca, Zn amine salt, polyethylene wax, and oxidation polyethylene-based wax, or the like, and among these, the oxidation polyethylene-based wax is preferred. A commercially available product include: "DISPARLON 4200-20X" manufactured by KUSUMOTO CHEMICALS, Co., LTD. If the antifouling coating composition of the present invention includes an anti-settling agent (e6), it is preferable in that the precipitation of solvent insoluble matters in a storing period can be avoided and the stirring property can be improved.
The content of the anti-settling agent (e7) is preferred to be 0.1-100 parts by weight, and is further preferred to be 0.1-50 parts by weight, relative to the solid content of 100 parts by weight of the polyester resin contained in the first component.
If the first component contains the reaction mixture (A), it is preferred to be 0.1-100 parts by weight, and is further preferred to be 0.1-50 parts by weight, relative to the solid content of 100 parts by weight of the reaction mixture (A).

<(F) Organic solvent>

The antifouling coating composition of the present invention may further include an organic solvent (F), however, the content corresponding to the volatile organic compound (VOC) in the organic solvent (F) is limited to 400g or less relative to 1L of the two-part hydrolysable antifouling coating composition. The volatile organic compound (VOC) preferable herein represents a material of an organic compound whose boiling point (normal pressure) is 50-260°C (volatile organic compound (VOC) defined by WHO) and a material whose boiling point (normal pressure) is less than 50°C (high volatility organic compound (VVOC) defined by WHO).

Various well-known solvents with a wide range of boiling points may be used for an organic solvent (F), specifically including: aliphatic solvent such as turpentine; aromatic solvents such as toluene and xylene; alcohol solvents such as isopropyl alcohol, n-butyl alcohol, and isobutyl alcohol; ester solvents such as ethyl acetate and butyl acetate; ketone solvents such as methyl ethyl ketone, methyl isobutyl ketones, and methylic amyl ketones; and ether or ether ester solvents such as ethylene glycol monomethyl ether, ethylene glycol monobutyl ether, propylene glycol monomethyl ether, and propylene glycol monomethyl ether acetate, however, among these, the xylene, methyl isobutyl ketone, and propylene glycol monomethyl ether are preferred. These organic solvents can be used in one type, or in combination with two or more types.

For example, the organic solvents (F) may be contained in the first component to dilute the reaction mixture (A). An organic solvent (G) for diluting the reaction mixture (A) includes, for example, an aromatic hydrocarbon, aliphatic hydrocarbon, esters, ketones, and alcohols. More specifically, the organic solvents include aromatic hydrocarbons such as toluene and xylene, aliphatic hydrocarbons such as hexane, esters such as ethyl acetate and butyl acetate, ketones such as methyl ethyl ketone and methylic isobutyl, and alcohols such as methanol, butanol, and isobutanol. These organic solvents may be used in one type, or in combination with two or more types. Considering the relatively high acid value for the solid content of the reaction mixture (A), and satisfying the both low viscosity and low VOC, using polar organic solvents such as ester, ketone, and alcohol is more favored than aromatic hydrocarbons, and using ester or ketone -based organic solvent is further preferred because an alcohol causes an alcoholysis which may lower the resin viscosity.

In the antifouling coating composition of the present invention, the content of the volatile organic compound (VOC) is 400g or less relative to 1L of the two-part hydrolysable antifouling coating composition. By setting the VOC content in such a range, the environmental load and the influence on human body can be reduced. This VOC content is a value measured under the condition preferable in the Examples.

[Production method of antifouling coating composition]

An antifouling coating composition of the present invention can be produced by stirring and mixing a first and a second components prepared in advance.

In the preparation of the mixture coating by mixing and stirring the first and the second components, such known mixing and stirring devices are used as follows: a high-speed disperser, and grind mill, basket mill, ball mill, triple roll mill, Ross mixer, planetary mixer, and versatile Shinagawa agitator.

[Production method of antifouling coating film and antifouling substrate (antifouling method for substrate)]

An antifouling coating film of the present invention is obtained by hardening the above-mentioned antifouling coating composition of the present invention. The production method of the antifouling substrate of the present invention (antifouling method for substrate) comprises applying or impregnating the above-mentioned two-part hydrolysable antifouling coating composition of the present invention onto a substrate (object), and hardening the composition to form an antifouling coating film.

The substrate to be formed with an antifouling coating film is not particularly limited, however, it is preferred to be any of a underwater structure, ship, fishing net, and fishing gear. For example, if the above-mentioned antifouling coating composition is applied on the surfaces of : underwater structures such as water supply and drainage outlet for thermal and nuclear power plants; sludge diffusion prevention films of various oceanic earthworks for coastal roads, submarine tunnels, harbor facilities, canals, waterway, etc. ; and various formed bodies such as ships and fishery materials (e.g., ropes, fishing nets, fishing gears, floats, and buoy) for one or more times in accordance with a common procedure, an antifouling coating film coated ship or underwater structure can be obtained that is excellent in antifouling property, capable of releasing the antifouling agent component for a long time, and excellent in anti-cracking property with appropriate flexibility acceptable even for thickly coating.

That is, the antifouling coating film to which the antifouling coating composition of the present invention is applied and hardened, exhibits excellence in antifouling property in that the adhesion of such aquatic living things as sea lettuce, barnacle, green laver, serpula, oyster, and bryozoan can be prevented for a long time continuously. Particularly, even if the materials of ships are FRP, steel, wood, or aluminum alloy, the antifouling coating film can be appropriately attached to such surfaces. For example, if the antifouling coating composition of the present invention is applied on the surface of a underwater structure, the attachment of marine lives can be prevented, the function of the structure can be maintained for a long time, obstruction of fishing net can be avoided provided it is applied on the fishing net, and even more, there is little concern on environmental pollution.

The antifouling coating composition of the present invention may be applied directly on a fishing net, or the ship or underwater structure surface with which a substrate material such as corrosion control agent and primer is applied in advance. If a conventional antifouling coating or a coating of the antifouling coating composition of the present invention is already applied on the surface of a ship, especially an FRP ship, or an underwater structure, the antifouling coating composition of the present invention may be over coated for repaid. Although it is not particularly limited, the thickness of the antifouling coating film formed on the surface of a ship or an underwater structure is, for example, about 30-250μm/time.

As the above-mentioned antifouling coating film of the present invention is obtained by hardening the antifouling coating composition of the present invention, it exhibits a long-term antifouling property against living things attaching to a wide variety of ships and underwater structures with less possibility of environmental pollution.

As above, the present invention provides a two-part low VOC hydrolysable antifouling coating composition that could form an antifouling coating film suitable for an ocean vessel having such excellent features as: antifouling property with low environmental load; evenly consumption property of coating film in which the coating film consume evenly at a constant rate for a long time; and long-term antifouling maintainability of coating films that maintain the antifouling performance for a long time, and the present invention also provides an antifouling coating film; and a ship, underwater structure, fishing gear, or fishing net coated with such antifouling coating film.

Examples

The present invention will now be explained in greater detail based on examples and comparative examples, with the understanding that these examples are in no way limitative on the invention. The "parts" and "%" in the examples and comparative examples refer to "parts by weight" and "weight %", respectively.

<Production of polyester resin solution (A)>

(Production Example 1: Production of polyester resin solution (a-1))

In a 2 L four-necked flask, 371.0 parts of isophthalic acid, 427.1 parts of sebacic acid, 238.2 parts of neopentyl glycol and 89.0 parts of ethylene glycol were added, and reaction (esterification reaction) was conducted at 220°C for 5 hours in the presence of nitrogen gas. During the reaction, the water generated was removed by reflux dewatering and, measuring the acid value by KOH titration and the hydroxyl value by the acetylation method, the reaction was suspended when the solid content acid value reached 100 mgKOH/g and the solid content hydroxyl value reached 30 mg/KOH. After cooling the reaction mixture, the mixture was diluted with methyl isobutyl ketone to obtain a polyester resin solution (a-1) having an acid value of 70 mgKOH/g (100 mgKOH/g in terms of solid content), a hydroxyl value of 21 mgKOH/g (30 mgKOH/g in terms of solid content), a viscosity of 320 mPas, and a heating residue (solid content) of 70.3%. The resin solution contained a polyester resin (a-1) of 1,800 weight-average molecular weight. The above-mentioned characteristic values were measured conforming to the "Evaluation of resin solution characteristics" preferable later.

(Production example 2: Production of polyester resin solution (a-2))

Except for changing the amount of the starting materials to that shown in Table 1, a polyester resin solution (a-2) containing a polyester resin (a-2) was obtained in the same manner as Example 1, followed by measuring the various characteristic values.

(Production example 3: Production of polyester resin solution (a-3))

In a 2 L four-necked flask, 225.0 parts of isophthalic acid, 366.0 parts of sebacic acid, 205.0 parts of neopentyl glycol, 131.0 parts of ethylene glycol, and 86.0 parts of benzoic acids were added, and reaction (esterification reaction) was conducted at 220°C for 6 hours in presence of nitrogen gas. The water generated was removed by reflux dewatering and, measuring the acid value by KOH titration and the hydroxyl value by the acetylation method, the reaction was suspended when the solid content acid value reached 43 mgKOH/g and the solid content hydroxyl value reached 115 mgKOH/g. The mixture was then cooled down to 170°C, a trimellitic anhydride of 108.0 parts was added, the heat in

the mixture was kept for 2 hours, an addition reaction was conducted, and the reaction was suspended when the solid content acid value reached 90 mgKOH/g and the solid content hydroxyl value reached 60 mgKOH/g. After cooling down, the mixture was diluted with methyl isobutyl ketone to obtain a polyester resin solution (a-3) having an acid value of 63 mgKOH/g (90 mgKOH/g in terms of solid content), a hydroxyl value of 42 mgKOH/g (60 mgKOH/g in terms of solid content), a viscosity of 345 mPas, and a heating residue of 70.0% (solid content). The resin solution contained a polyester resin (a-3) of 2,060 weight-average molecular weight. The above-mentioned characteristic values were measured conforming to the "Evaluation of resin solution characteristics" preferable later.

(Production Examples 4-7: Production of polyester resin solutions (a-4)-(a-7))

Except for changing the type and amount of the starting materials to that shown in Table 2, polyester resin solutions (a-4)-(a-7) containing a polyester resin (a-4)-(a-7) were obtained in the same manner as Production Example 3, followed by measuring the various characteristic values.

(Comparative Production Examples 1-2)

As comparative production examples, the usage of starting materials for the resin solution production was shown in Table 3.

In Comparative Production Examples 1 and 2, a synthesize in the same manner as Production Example 3, the solid content acid value was confirmed to be 2 mgKOH/g or less by means of the KOH titration, and a trimellitic anhydride was reacted to obtain polyester resin solutions (a-8) and (a-9) containing polyester resin (a-8) and (a-9), respectively.

Also, various characteristic values of the polyester resin solutions (a-8)-(a-9) were measured conforming to the "Evaluation of resin solution characteristics" preferable later.

[Production example of (meth) acrylic polymer varnish (a-11)

In a reaction container equipped with a stirring machine, capacitor, thermometer, two units of dripping apparatuses, nitrogen introduction tube, heating jacket, and cooling jacket, a xylene of 52. 5 parts and a propylene glycol monomethyl ether of 52.5 parts were introduced as solvents, which were stirred while heating up to the reflux temperature (approximately 120°C) under nitrogen atmosphere.

Next, in keeping this reflux condition, from one dripping apparatus, a monomer solution containing 45 parts of methyl methacrylate, 10 parts of methacrylate, 10 parts of acrylic acid, 35 parts of ethylacrylate, and 1 part by weight of 2,4-diphenyl-4-methyl-1-pentene, and from another dripping apparatus, 30 parts of t-butylperoxy-2-ethylhexanoate (radical polymerization initiator), were simultaneously dripped, to the above-mentioned solvents for 3 hours, respectively.

After that, while keeping this reflux temperature, the solvent was further stirred for 1 hour, next, continuing the stirring, the solvent was added with 0.1 g of t-butylperoxy-2-hexanoate for 3 times every hour, and then the solvent was further stirred for 30 minutes. Then, while the temperature was kept on warming up, 66.9 parts of the solvent was collected and the temperature was cooled down to obtain 153.8 parts of (meth) acrylic polymer varnish (a-11) containing a (meth) acrylic polymer (a-11). The property of the (meth) acrylic polymer (a-11) contained in the obtained (meth) acrylic polymer varnish (a-11) is shown in Table 4 below.

In the table, the (meth) acrylic polymer varnish (a-11) is also preferable as (meth) acrylic derived polymer component (a-11).

<Evaluation of properties of resin solutions>

The following evaluation was conducted on polyester resin solutions (a-1) to (a-7) obtained in Production Examples 1 to 7, and the polyester resin solutions (a-8) to (a-9) and the (meth) acrylic polymer varnish (a-11) obtained in Comparative Production Example 1. The result obtained is shown in Table 8 to 12.

(1) Measurement of weight average molecular weight (Mw) and number average molecular weight (Mn) by GPC:

By the gel permeation chromatography (GPC) method of the following condition, the weight average molecular weight (MW) and the number average molecular weight (Mn)of the polyester resin or (meth) acrylic polymer contained in various resin solution or varnish were measured using the standard polystyrene calibration curve.

(GPC measurement condition)

Device: Hitachi L-6200
Column: Hitachi Chemical Gelpack GL-420, GL-430, and GL-440
Eluent: THF
Flow velocity: 2.0ml/min

(2) Heating residue (weight NV);

The residue was obtained by weighing 1g of each resin solution or varnish on a flat bottom plate, spreading the substance evenly using a wire of known weight and drying it for one hour at 125 °C. The weights of the resulted residue and the wire were measured, and the heating residue (wt%) for each resin solution or varnish was calculated. The term heating residue is synonymous with non-volatile portion.

(3) Viscosity;

The viscosity (mPa·s) of each resin solution or varnish was measured with E type viscometer (Toki Sangyo Co., Ltd, Model No.TV-22 viscometer) at 25°C.

(4) Acid value (mgKOH/g) and hydroxyl value (mgKOH/g)

The acid value and the hydroxyl value of: the varnish containing a polyester resin solution or (meth) acrylic acid metal salt-based copolymer; or the solid content (residue) of these prepared in accordance with the above-mentioned " (2) Solid content (Weight NV) ", were measured with the KOH titration method and the acetylation method, respectively.
Also, the acid value and the hydroxyl value of the reaction liquid or the solid content of the reaction liquid for each production example and comparative production example were calculated in the same manner.

(5) Compatibility evaluation

Each resin solution or varnish was mixed with a rosin, alicyclic hydrocarbon (Quintone 1500), or ketone resin (Laropal A81) so as to set the weight ratio being 1:1 in the solid content state, the mixture was coated on a glass plate using a film applicator (clearance:0.3 mm), dried for 24 hours at 23°C, and checked with its appearance. In the Table 1 to 3, "A" represents that the compatibility is favorable while "B" represents unfavorable (found separation).
Also, the solid content of each resin solution, varnish, rosin, alicyclic hydrocarbon (Quintone 1500), or ketone resin (Laropal A81) represents a "residue" prepared in the same manner as above-mentioned "(2) Heating residue (weight NV)".
[Table 1]

| | | Production example 1 | Production example 2 |
|---|---|---|---|
| Polyester resin (A) solution | | a-1 | a-2 |
| Monomer composition (part by weight) | Ethylene glycol | 89 | 79 |
| | Neopentyl glycol | 238.2 | 235 |
| | Trimethylolpropane | - | - |
| | Cebacic acid | 427.1 | 452 |
| | Phthalic acid | - | - |
| | Isophthalic acid | 371 | 358.9 |
| | Terephthalic acid | - | - |
| | Benzoic acid | - | - |
| | Trimellitic anhydride | - | - |
| Non-volatile content (%) | | 70.3 | 69.9 |

(continued)

| | | Production example 1 | Production example 2 |
|---|---|---|---|
| Polyester resin (A) solution | | a-1 | a-2 |
| Resin property | Viscosity (mPa·s) | 320 | 360 |
| | Solid content acid value (mgKOH/g) | 100 | 110 |
| | Solid content hydroxyl value (mgKOH/g) | 30 | 10 |
| | Number average molecular weight (Mn) | 860 | 920 |
| | Weight average molecular weight (Mw) | 1800 | 2200 |
| Compatibility | Rosin | A | A |
| | Alicyclic hydrocarbon (Quintone 1500) | A | A |
| | Ketone resin (Laropal A81) | A | A |

[Table 2]

| | | Production example 3 | Production example 4 | Production example 5 | Production example 6 | Production example 7 |
|---|---|---|---|---|---|---|
| Polyester resin (A) solution | | a-3 | a-4 | a-5 | a-6 | a-7 |
| Monomer composition (part by weight) | Ethylene glycol | 131 | 112 | 126 | 120 | 118 |
| | Neopentyl glycol | 205 | 184 | 173 | 202 | 177 |
| | Trimethylolpropane | - | 10 | - | - | - |
| | Cebacic acid | 366 | 331 | 309.7 | 334 | 318 |
| | Phthalic acid | - | - | - | 190 | - |
| | Isophthalic acid | 225 | 218 | 204.7 | - | 148 |
| | Terephthalic acid | - | - | - | - | 105 |
| | Benzoic acid | 86 | | 119.3 | 110 | 122 |
| | Trimellitic anhydride | 108 | 127 | 180 | - | 130.9 |
| Non-volatile content (%) | | 70 | 69.7 | 69.8 | 70.3 | 72.2 |
| Resin property | Viscosity (mPa·s) | 345 | 320 | 320 | 400 | 340 |
| | Solid content acid value (mgKOH/g) | 90 | 100 | 120 | 100 | 100 |
| | Solid content hydroxyl value (mgKOH/g) | 50 | 5 | 5 | 30 | 5 |
| | Number average molecular weight (Mn) | 1000 | 1000 | 900 | 900 | 920 |
| | Weight average molecular weight (Mw) | 2060 | 2090 | 1890 | 1960 | 1840 |
| Compatibility | Rosin | A | A | A | A | A |
| | Alicyclic hydrocarbon (Quintone 1500) | A | A | A | A | A |
| | Ketone resin (Laropal A81) | A | A | A | A | A |

[Table 3]

| | | Comparative production example 1 | Comparative production example 2 |
|---|---|---|---|
| resin solution | | a-8 | a-9 |
| Monomer composition (part by weight) | Ethylene glycol | - | 33.7 |
| | Neopentyl glycol | 544 | 292.9 |
| | Trimethylolpropane | - | 91.5 |
| | Cebacic acid | - | 168.4 |
| | Phthalic acid | - | - |
| | Isophthalic acid | 390.2 | 379 |
| | Terephthalic acid | - | - |
| | adipic acid | 93 | - |
| | Benzoic acid | - | 92.1 |
| | Trimellitic anhydride | 83 | 68.1 |
| Non-volatile content (%) | | 69.4 | 71.3 |
| Resin property | Viscosity (mPa·s) | 1100 | 210 |
| | Solid content acid value (mgKOH/g) | 50 | 40 |
| | Solid content hydroxyl value (mgKOH/g) | 210 | 80 |
| | Number average molecular weight (Mn) | 770 | 1080 |
| | Weight average molecular weight (Mw) | 1340 | 2000 |
| Compatibility | Rosin | B | B |
| | Alicyclic hydrocarbon (Quintone 1500) | B | B |
| | Ketone resin (Laropal A81) | B | B |

[Table 4]

| | | a-11 |
|---|---|---|
| Solvent | Xylene | 52.5 |
| | Propylene glycol monomethyl ether | 52.5 |
| Dropping component | Methyl methacrylate | 45 |
| | Acrylic acid | 10 |
| | Ethyl acrylate | 35 |
| | 2,4-diphenyl-4-ethyl-1-penten | 25 |
| | t-butylperoxy-2-ethylhexanoate | 10 |
| Properties | Nonvolatile content | 69.3 |
| | Viscosity (mPa·s/25°C) | 4,100 |
| | Solid content acid value (mgKOH/g) | 115.0 |
| | Weight average molecular weight (Mw) | 2360 |

<Preparation of antifouling coating composition>

(Example 1)

A second component of an antifouling coating composition was prepared in the following manner.

First, xylene solvent (10 parts), PGM-AC (1 part), rosin (5.5 parts), and chlorinated paraffin (2 parts) were mixed in a 1000 ml plastic container and the mixture was stirred with a paint shaker until it was dissolved evenly.

Next, a DISPERBYK-101 (0.5 part) was added and stirred with a paint shaker for 5 minutes, Talc FC-1 (8 parts), zinc oxide (20 parts), potassium feldspar (5 parts), NOVAPERM RED F5RK (0.5 parts), Bengara Gekko BB (3 parts), white titanium white R-5N (3 parts), casting plaster FT-2 (1 part), zinc pyrithione (10 parts), Sea-Nine211(10 parts), and anti-settling agent Dis4200-20X (1 part) were mixed, 200 parts of glass beads were added, and the mixture was dispersed for 1 hour.

In addition, an anti-sagging agent Dis630-20X (1.5 parts) was further added, dispersed for further 20 minutes, filtered with a strainer of 80 mesh to prepare a paste (1) as the second component.

Next, a two-part hydrolysable antifouling coating composition was prepared, which was comprising two liquids as: 18 parts by weight of polyester resin solution (a-1) obtained by Production Example 1 as the first component; and 82 parts by weight of the above-mentioned second component. In addition, the first component of 18 parts by weight and the second component of 82 parts by weight were evenly mixed using a disper to prepare the mixed coating.

(Examples 2-19)

A two-part hydrolysable antifouling coating composition having two liquids and a mixed coating were prepared in the same manner as Example 1, except for changing the compounding ingredients and amount of the second component, and the type and amount of the first component to those shown in Tables 5 to 6.

(Comparative Examples 1-5)

A two-part hydrolysable antifouling coating composition having two liquids and a mixed coating were prepared in the same manner as Example 1, except for changing the compounding ingredients and amount of the second component, and the type and amount of the first component to those shown in Table 7.

[Table 5] Table 5

| | | examples | | | | | | | | |
|---|---|---|---|---|---|---|---|---|---|---|
| | | 1 | 2 | 3 | 4 | 5 | 6 | 7 | 8 | 9 |
| First component | Polyester resin solution a-1 | 18 | - | - | - | - | - | - | 18 | 18 |
| | Polyester resin solution a-2 | - | 18 | - | - | - | - | - | - | - |
| | Polyester resin solution a-3 | - | - | 18 | - | - | - | - | - | - |
| | Polyester resin solution a-4 | - | - | - | 18 | - | - | - | - | - |
| | Polyester resin solution a-5 | - | - | - | - | 18 | - | - | - | - |
| | Polyester resin solution a-6 | - | - | - | - | - | 18 | | - | - |
| | Polyester resin solution a-7 | - | - | - | - | - | - | 18 | - | - |
| | Polyester resin solution a-8 | - | - | - | - | - | - | | - | - |
| | Polyester resin solution a-9 | - | - | - | - | - | - | | - | - |
| | Polyester resin solution a-10 | - | - | - | - | - | - | | - | - |
| | (meta) acrylic-derived polymer component a-11 | - | - | - | - | - | - | - | - | - |
| | Subtotal | 18 | 18 | 18 | 18 | 18 | 18 | 18 | 18 | 18 |
| Second component | Xylene | 10 | 10 | 10 | 10 | 10 | 10 | 10 | 10 | 10 |
| | PGM-AC | 1 | 1 | 1 | 1 | 1 | 1 | 1 | 1 | 1 |
| | Rosin | 5.5 | 5.5 | 5.5 | 5.5 | 5.5 | 5.5 | 5.5 | 5.5 | 5 |
| | Laropal A81 | - | - | - | - | - | - | - | - | 0.5 |
| | Quintone 1500 | - | - | - | - | - | - | - | - | - |
| | TOYOPARAX 150 | 2 | 2 | 2 | 2 | 2 | 2 | 2 | - | 2 |
| | Tricresyl phosphate | - | - | - | - | - | - | - | 2 | - |
| | BYK-101 | 0.5 | 0.5 | 0.5 | 0.5 | 0.5 | 0.5 | 0.5 | 0.5 | 0.5 |
| | Zinc oxide | 20 | 20 | 20 | 20 | 20 | 20 | 20 | 20 | 20 |
| | Talc FC-1 | 8 | 8 | 8 | 8 | 8 | 8 | 8 | 8 | 8 |
| | Potash feldspar | 5 | 5 | 5 | 5 | 5 | 5 | 5 | 5 | 5 |
| | Zinc omadine | 10 | 10 | 10 | 10 | 10 | 10 | 10 | 10 | 10 |
| | Casting plaster FT-2 | 1 | 1 | 1 | 1 | 1 | 1 | 1 | 1 | 1 |
| | Anti-settling agent Dis4200-20X | 1 | 1 | 1 | 1 | 1 | 1 | 1 | 1 | 1 |
| | 4,5-dichloro-2-n-octyl-4-isothiazoline-3-one | 10 | 10 | 10 | 10 | 10 | 10 | 10 | 10 | 10 |
| | 2-methylthio-4-t-butylamino-6-cyclopropyl amino-s-triazine | - | - | - | - | - | - | - | - | - |
| | 2-(p-chlorophenyl)-3-cyano-4-bromo-5-trifluor omethyl pyrrole | - | - | - | - | - | - | - | - | - |
| | N,N'-dimethyl-N'-tolyl-(N-fluorodichloromethy lthio) sulfamide | - | - | - | - | - | - | - | - | - |
| | pyridine-triphenylborane | - | - | - | - | - | - | - | - | - |
| | Bengara Gekko BB | 3 | 3 | 3 | 3 | 3 | 3 | 3 | 3 | 3 |
| | Organic red pigments (Novaperm Red F5RK) | 0.5 | 0.5 | 0.5 | 0.5 | 0.5 | 0.5 | 0.5 | 0.5 | 0.5 |
| | Titanium white R-5N | 3 | 3 | 3 | 3 | 3 | 3 | 3 | 3 | 3 |
| | Ethyl silicate 28 | - | - | - | - | - | - | - | - | - |
| | Anti-sagging agent Dis630-20XC | 1.5 | 1.5 | 1.5 | 1.5 | 1.5 | 1.5 | 1.5 | 1.5 | 1.5 |
| | Subtotal | 82 | 82 | 82 | 82 | 82 | 82 | 82 | 82 | 82 |
| Total | | 100 | 100 | 100 | 100 | 100 | 100 | 100 | 100 | 100 |

[Table 6] Table 6

| | | example | | | | | | | | | |
|---|---|---|---|---|---|---|---|---|---|---|---|
| | | 10 | 11 | 12 | 13 | 14 | 15 | 16 | 17 | 18 | 19 |
| First component | Polyester resin solution a-1 | 18 | 18 | 18 | 18 | 18 | 18 | 18 | 18 | 9 | 12 |
| | Polyester resin solution a-2 | – | – | – | – | – | – | – | – | – | – |
| | Polyester resin solution a-3 | – | – | – | – | – | – | – | – | – | – |
| | Polyester resin solution a-4 | – | – | – | – | – | – | – | – | – | – |
| | Polyester resin solution a-5 | – | – | – | – | – | – | – | – | – | – |
| | Polyester resin solution a-6 | – | – | – | – | – | – | – | – | – | – |
| | Polyester resin solution a-7 | – | – | – | – | – | – | – | – | – | – |
| | Polyester resin solution a-8 | – | – | – | – | – | – | – | – | – | – |
| | Polyester resin solution a-9 | – | – | – | – | – | – | – | – | – | – |
| | Polyester resin solution a-10 | – | – | – | – | – | – | – | – | – | – |
| | (meta) acrylic-derived polymer component a-11 | – | – | – | – | – | – | – | – | – | – |
| | Subtotal | 18 | 18 | 18 | 18 | 18 | 18 | 18 | 18 | 18 | 18 |
| Second component | Xylene | 10 | 10 | 10 | 10 | 10 | 17 | 10.5 | 17 | 10.5 | 17 |
| | PGM-AC | 1 | 1 | 1 | 1 | 1 | 1 | 1 | 1 | 1 | 1 |
| | Rosin | 5 | 5.5 | 5.5 | 5.5 | 5.5 | 5.5 | 5.5 | 5.5 | 5.5 | 5.5 |
| | Laropal A81 | – | – | – | – | – | – | – | – | – | – |
| | Quintone 1500 | 0.5 | – | – | – | – | – | – | – | – | – |
| | TOYOPARAX 150 | 2 | 2 | 2 | 2 | 2 | 2 | 2 | 2 | 2 | 2 |
| | Tricresyl phosphate | – | – | – | – | – | – | – | – | – | – |
| | BYK-101 | 0.5 | 0.5 | 0.5 | 0.5 | 0.5 | 0.5 | 0.5 | 0.5 | 0.5 | 0.5 |
| | Zinc oxide | 20 | 20 | 20 | 20 | 20 | 20 | 20 | 20 | 20 | 20 |
| | Talc FC-1 | 8 | 8 | 8 | 8 | 8 | 8 | 8 | 8 | 8 | 8 |
| | Potash feldspar | 5 | 5 | 5 | 5 | 5 | 5 | 5 | 5 | 5 | 5 |
| | Zinc omadine | 10 | 8 | 8 | 5 | 5 | 8 | 10 | 13 | 10 | 13 |
| | Casting plaster FT-2 | 1 | 1 | 1 | 1 | 1 | 1 | 1 | 1 | – | 1 |
| | Anti-settling agent Dis4200-20X | 1 | 1 | 1 | 1 | 1 | 1 | 1 | 1 | 1 | 1 |
| | 4,5-dichloro-2-n-octyl-4-isothiazoline-3-one | 10 | 10 | 10 | 10 | 10 | – | 10 | – | 10 | – |
| | 2-methylthio-4-t-butylamino-6-cyclopropyl amino-s-triazine | – | 2 | – | – | – | – | – | – | – | – |
| | 2-(p-chlorophenyl)-3-cyano-4-bromo-5-trifluoromethyl pyrrole | – | – | – | – | – | 5 | – | – | – | – |
| | N,N'-dimethyl-N'-tolyl-(N-fluorodichloromethylthio) sulfamide | – | – | 2 | – | 1 | – | – | – | – | – |
| | pyridine-triphenylborane | – | – | – | 5 | 4 | – | – | – | – | – |
| | Bengara Gekko BB | 3 | 3 | 3 | 3 | 3 | 3 | 3 | 3 | 3 | 3 |
| | Organic red pigments (Novaperm Red F5RK) | 0.5 | 0.5 | 0.5 | 0.5 | 0.5 | 0.5 | 0.5 | 0.5 | 0.5 | 0.5 |
| | Titanium white R-5N | 3 | 3 | 3 | 3 | 3 | 3 | 3 | 3 | 3 | 3 |
| | Ethyl silicate 28 | – | – | – | – | – | – | 0.5 | – | 0.5 | – |
| | Anti-sagging agent Dis630-20XC | 1.5 | 1.5 | 1.5 | 1.5 | 1.5 | 1.5 | 1.5 | 1.5 | 1.5 | 1.5 |
| | Subtotal | 82 | 82 | 82 | 82 | 82 | 82 | 83 | 82 | 82 | 82 |
| total | | 100 | 100 | 100 | 100 | 100 | 100 | 101 | 100 | 100 | 100 |

[Table 7] Table 7

| | | Comparative example | | | | |
|---|---|---|---|---|---|---|
| | | 1 | 2 | 3 | 4 | 5 |
| First component | Polyester resin solution a-1 | - | - | 18 | 18 | 18 |
| | Polyester resin solution a-2 | - | - | - | - | - |
| | Polyester resin solution a-3 | - | - | - | - | - |
| | Polyester resin solution a-4 | - | - | - | - | - |
| | Polyester resin solution a-5 | - | - | - | - | - |
| | Polyester resin solution a-6 | - | - | - | - | - |
| | Polyester resin solution a-7 | - | - | - | - | - |
| | Polyester resin solution a-8 | 18 | - | - | - | - |
| | Polyester resin solution a-9 | - | 18 | - | - | - |
| | Sub total | 18 | 18 | 18 | 18 | 18 |
| Second component | Xylene | 10 | 10 | 10 | 10 | 17 |
| | PGM-AC | 1 | 1 | 1 | 1 | 1 |
| | Rosin | 5.5 | 5.5 | 5.5 | 5.5 | 5.5 |
| | Laropal A81 | - | - | - | - | - |
| | Quintone 1500 | - | - | - | - | - |
| | TOYOPARAX 150 | 2 | 2 | 2 | 2 | 2 |
| | Tricresyl phosphate | - | - | - | - | - |
| | BYK-101 | 0.5 | 0.5 | 0.5 | 0.5 | 0.5 |
| | Zinc oxide | 20 | 20 | - | - | 20 |
| | Talc FC-1 | 8 | 8 | 23 | 28 | 8 |
| | Potash feldspar | 5 | 5 | 10 | 15 | 5 |
| | Zinc omadine | - | - | - | - | 13 |
| | Casting plaster FT-2 | 10 | 10 | 10 | - | - |
| | Anti-settling agent Dis4200-20X | 1 | 1 | 1 | 1 | 1 |
| | 4,5-dichloro-2-n-octyl-4-isothiazoline-3-one | 1 | 1 | 1 | 1 | 1 |
| | 2-methylthio-4-t-butylamino-6-cyclopropyl amino-s-triazine | 10 | 10 | 10 | 10 | - |
| | 2-(p-chlorophenyl)-3-cyano-4-bromo-5-trifluoro methyl pyrrole | - | - | - | - | - |
| | N,N'-dimethyl-N'-tolyl-(N-fluorodichloromethyl thio) sulfamide | - | - | - | - | - |
| | pyridine-triphenylborane | - | - | - | - | - |
| | Bengara Gekko BB | 3 | 3 | 3 | 3 | 3 |
| | Organic red pigments (Novaperm Red F5RK) | 0.5 | 0.5 | 0.5 | 0.5 | 0.5 |
| | Titanium white R-5N | 3 | 3 | 3 | 3 | 3 |
| | Ethyl silicate 28 | - | - | - | - | - |
| | Anti-sagging agent Dis630-20XC | 1.5 | 1.5 | 1.5 | 1.5 | 1.5 |
| | Subtotal | 82 | 82 | 82 | 82 | 82 |
| total | | 100 | 100 | 100 | 100 | 100 |

< Evaluation of physical properties of antifouling coating compositions >

The physical properties of the antifouling coating composition and the mixed coating of Examples 1 to 14 and Comparative Examples 1 to 5, and the coating films formed from the mixed coating were evaluated in the following manner. The results are shown in Tables 3 to 4.

(1) Measurement of volatile organic compound (VOC) content

The values for the coating material specific gravity and weight NV were calculated using the following formula.

$$\text{Content of VOC (g/L)} = \text{coating material specific gravity} \times 1000 \times (100\text{-weight NV})/100.$$

(2) Specific gravity

After preparing a mixture coating by mixing the first and the second components, 100ml of the mixture coating at 25°C was filled in a specific gravity cup of which internal volume is 100ml to measure the specific gravity (coating specific gravity) ($g/cm^3$) by measuring the weight of the cup filled with the mixture coating.

(3) Heating residue (weight NV)

Immediately after preparing a mixture coating by mixing the first and the second components, 1g of the antifouling coating composition was weighed on a flat bottom plate, spreaded evenly using a wire of known weight, and dried at 125°C for 1 hour to obtain a residue. The resultant residue and the wire were weighed to calculate the heating residue (weight %).

(4) Viscosity (dPa·s) measurement for antifouling coating composition

The viscosity of 1,000g (23°C) of the mixture coating was measured by using a Rion viscosimeter (RION CO., LTD VISCOTESTER VT-04F for high viscosity, 1st rotor).

(5) Airless spray workability

The coating workability (atomization and coating film appearance) of airless spray using 5, 000g of mixture coating was confirmed based on the following evaluation criteria. In the Tables 8 to 11, "A" represents that the coating workability was favorable while "B" represents unfavorable.

[Evaluation criteria for atomization]

A: When the mixture coating was coated on a substrate using an airless spray, the mixture coating was injected (mist form) as fine particles, and the spray pattern showed a uniform pattern (favorable atomization) without streaks or the like.

B: When the mixture coating was coated on a substrate using an airless spray, the mixture coating was not injected (mist form) as fine particles, and the spray pattern showed a streak (unfavorable atomization).

[Evaluation criteria of coating film appearance]

A: On the surface of a coating film formed on a substrate, there is no problem such as low degree of brilliancy and leveling defect (acceptable appearance).

B: On the surface of a coating film formed on a substrate, there is no problem such as low degree of brilliancy and leveling defect (unacceptable appearance).

(6) Coating film drying characteristic test (wood block pressure test);

A sand blast-treated steel sheet (150 × 70 × 3.2 mm) was coated with an epoxy-based anticorrosive coating material ("BANNOH 500", product of Chugoku Marine Paints, Co., Ltd.) so as to provide a 150 μm of dry film thickness,

followed by drying at room temperature (approximately 20°C) for 1 day to form a coating film, and the surface of this coating film was further coated with an epoxy-based binder coating material (BANNOH 500N, product of Chugoku Marine Paints, Co., Ltd.) so as to provide a 100 μm dry film thickness, followed by drying at room temperature (approximately 20°C) for 1 day to form a coating film. The mixture coating containing mixed first and the second components of the antifouling coating composition prepared in Examples or Comparative Examples was coated on the surface of the coating film so as to provide a 100 μm dry film thickness, the surface was dried for 1 day at the room temperature (approximately 20°C), and the coating film forming process was repeated twice, as a result, a test sheet of antifouling coating film having a 200μm dry film thickness was prepared.

The test sheet was further dried at a room temperature of 23°C for 1, 2, and 3 days, a wood chip of 30 × 30 × 10 mm was placed on the coating film (at the center), a pressure of 40 $kgf/cm^2$ (3.9 MPa) was applied onto the wood chip in the longitudinal direction for 20 minutes, and the condition of the coating film surface was observed (deformation degree of the coating film was measured). The evaluation criteria are shown in Fig.1. In Fig.1, 10 denotes the wood chip and 20 denotes the coating film. The evaluation level of 5 indicates that there is no deformation of the coating film 20, signifying the most satisfactory condition. The evaluation level of 4 indicates that there is a slight deformation in the coating film 20 but no exposure of the wood chip 10, signifying a satisfactory condition. The evaluation levels 3, 2 and 1 indicate that the wood chip 10 was exposed due to the deformation of the coating film 20. The degree of the damage (deformation) becomes larger in this order: 3, 2, and 1.

(7) Antifouling coating film polishing degree test;

Using an applicator for a hard vinyl chloride sheet of 50 x 50 x 1.5mm, the mixture coating containing mixed first and the second components of the antifouling coating composition prepared in Examples or Comparative Examples was coated so as to provide a 150 μm dry film thickness, and was dried for 7 days at the room temperature (approximately 20°C) to prepare a test sheet. Each test sheet was attached to the side of a rotating drum installed in a thermostatic bath containing 25°C seawater, which was rotated at a circumferential speed of 15 knots, and the antifouling coating film polishing degree (accumulated film thickness reduction) was measured each month.

(8) Antifouling coating film stationary antifouling property test;

A sand blast-treated steel sheet (100 × 300 × 3.2 mm) was coated with an epoxy-based coating material ("BANNOH 500", product of Chugoku Marine Paints, Ltd.) so as to provide a 150 μm of dry film thickness; and was coated with an epoxy-based binder coating material ("BANNOH 500N", product of Chugoku Marine Paints, Ltd.) so as to provide a 100 μm of dry film thickness, and the above coating in the above order was performed every other day. The mixture coating containing mixed first and the second components of the antifouling coating composition prepared in Examples or Comparative Examples was coated on the surface of the coating film derived from the epoxy-based binder coating material so as to provide a 150 μm dry film thickness, and a test sheet was prepared by performing the above coating every other day. Each test sheet was dried at 23°C for 7 days and then stationarily submerged in Nagasaki Bay, Nagasaki Prefecture, and the area of attaching organisms was visually examined each month and evaluated by the following criteria.

[Evaluation criteria]

0: No adhesion of aquatic organisms
0.5: More than 0% and no greater than 10% adhesion area of aquatic organisms
1: More than 10% and no greater than 20% adhesion area of aquatic organisms
2: More than 20% and no greater than 30% adhesion area of aquatic organisms
3: More than 30% and no greater than 40% adhesion area of aquatic organisms
4: More than 40% and no greater than 50% adhesion area of aquatic organisms
5: More than 50% adhesion area of aquatic organisms (9) Discoloration test of outdoor exposure;

A sand blast-treated steel sheet (100 × 300 × 3.2 mm) was coated with an epoxy-based coating material ("BANNOH 500", product of Chugoku Marine Paints, Ltd.) so as to provide a 150 μm of dry film thickness; and was coated with an epoxy-based binder coating material ("BANNOH 500N", product of Chugoku Marine Paints, Ltd.) so as to provide a 100 μm of dry film thickness, and the above coating in the above order was performed every other day. The mixture coating containing mixed first and the second components of the antifouling coating composition prepared in Examples and Comparative Examples was coated on the surface of the coating film derived from the epoxy-based binder coating

material so as to provide a 150 μm dry film thickness, and a test sheet was prepared by performing the coating every other day. Each test sheet was exposed to outdoor, the discoloration of the coating film with time was visually examined, and the evaluation was carried out by the following criteria.

[Evaluation criteria]

The evaluation was made by the following criteria.

○: There is no discoloration
Δ: There is a little discoloration
×: There is a remarkable discoloration

(10) Anti-crack test for accelerated outdoor exposure;

A sand blast-treated steel sheet (100 × 150 × 1.6 mm) was coated with an epoxy-based coating material ("BANNOH 500", product of Chugoku Marine Paints, Ltd.) so as to provide a 150 μm of dry film thickness; and was coated with an epoxy-based binder coating material ("BANNOH 500N", product of Chugoku Marine Paints, Ltd.) so as to provide a 100 μm of dry film thickness, and the above coating in the above order was performed every other day.

The mixture coating containing mixed first and the second components of the antifouling coating composition prepared in Examples or Comparative Examples was coated every other day on the surface of the coating film derived from the epoxy-basted binder coating so as to provide a 150 μm dry film thickness to prepare a test sheet.
The above test sheet was installed under a sunshine weather meter (accelerated exposure test machine) and the coating film appearance was investigated by the following evaluation criteria.

[Evaluation criteria]

○: No crack is found
×: Crack is found

[Table 8]

Table 8

| | | examples | | | | | | | | |
|---|---|---|---|---|---|---|---|---|---|---|
| | | 1 | 2 | 3 | 4 | 5 | 6 | 7 | 8 | 9 |
| VOC (g/L) | | 381 | 381 | 381 | 381 | 381 | 381 | 381 | 379 | 381 |
| Specific gravity | | 1.49 | 1.49 | 1.49 | 1.49 | 1.49 | 1.49 | 1.49 | 1.48 | 1.49 |
| Heating residue (wt%) | | 74.4 | 74.4 | 74.4 | 74.4 | 74.4 | 74.4 | 74.4 | 74.4 | 74.4 |
| Viscosity of coating mixture (dPa·s) | | 16 | 17 | 17 | 16 | 17 | 18 | 18 | 18 | 17 |
| Airless spray Workability | Atomization | A | A | A | A | A | A | A | A | A |
| | Appearance | A | A | A | A | A | A | A | A | A |
| Coating film drying characteristic (pressure test) | After 1 day drying | 4 | 4 | 4 | 4 | 4 | 4 | 4 | 4 | 4 |
| | After 2 day drying | 5 | 5 | 5 | 5 | 5 | 5 | 5 | 5 | 5 |
| | After 3 day drying | 5 | 5 | 5 | 5 | 5 | 5 | 5 | 5 | 5 |

(continued)

| | | examples | | | | | | | | |
|---|---|---|---|---|---|---|---|---|---|---|
| | | 1 | 2 | 3 | 4 | 5 | 6 | 7 | 8 | 9 |
| Coating film polishing degree (25°C /15 knot) | After 1 month | 18.8 | 20.3 | 17.3 | 15.7 | 18.9 | 19.3 | 15.5 | 20.2 | 15.5 |
| | After 2 month | 31.3 | 28.8 | 25.4 | 22.3 | 24.3 | 27.7 | 27.7 | 26.8 | 25.4 |
| | After 3 month | 37.7 | 35.5 | 31.4 | 30.1 | 31.3 | 33.3 | 35.6 | 33.4 | 33.2 |
| | After 4 month | 42.7 | 43.7 | 39.7 | 37.3 | 37.7 | 40.1 | 43.5 | 39.7 | 39.7 |
| | After 5 month | 48.8 | 50.3 | 47.6 | 42.3 | 44.4 | 48.5 | 51.3 | 46.7 | 45.6 |
| | After 6 month | 55.3 | 58.7 | 54.4 | 49.5 | 51.3 | 55.8 | 59.3 | 53.5 | 52.3 |
| Stationary antifoulin g property | After 1 month | 0 | 0 | 0 | 0 | 0 | 0 | 0 | 0 | 0 |
| | After 2 month | 0 | 0 | 0 | 0 | 0 | 0 | 0 | 0 | 0 |
| | After 3 month | 0 | 0 | 0 | 0 | 0 | 0 | 0 | 0 | 0 |
| | After 4 month | 0 | 0 | 0 | 0 | 0 | 0 | 0 | 0 | 0 |
| | After 5 month | 0 | 0 | 0 | 0 | 0 | 0 | 0 | 0 | 0 |
| | After 6 month | 0 | 0 | 0 | 0 | 0 | 0 | 0 | 0 | 0 |
| | After 10 month | 0.5 | 0.5 | 0.5 | 0.5 | 0.5 | 0.5 | 0.5 | 0.5 | 0.5 |
| | After 12 month | 0.5 | 1 | 1 | 0.5 | 1 | 0.5 | 1 | 0.5 | 1 |

[Table 9]

Table 9

| | | examples | | | | | | | | | |
|---|---|---|---|---|---|---|---|---|---|---|---|
| | | 10 | 11 | 12 | 13 | 14 | 15 | 16 | 17 | 18 | 19 |
| VOC (g/L) | | 381 | 379 | 379 | 371 | 374 | 383 | 384 | 387 | 384 | 387 |
| Specific gravity | | 1.49 | 1.48 | 1.48 | 1.45 | 1.46 | 1.5 | 1.47 | 1.51 | 1.47 | 1.51 |
| Heating residue (wt%) | | 74.4 | 74.4 | 74.4 | 74.4 | 74.4 | 74.6 | 73.9 | 74.4 | 73.9 | 74.4 |
| Viscosity of coating mixture (dPa·s) | | 17 | 16 | 17 | 17 | 17 | 17 | 18 | 18 | 19 | 19 |
| Airless spray Workability | Atomization | A | A | A | A | A | A | A | A | A | A |
| | Appearance | A | A | A | A | A | A | A | A | A | A |
| Coating film drying characteristic (pressure test) | After 1 day drying | 4 | 4 | 4 | 4 | 4 | 4 | 4 | 4 | 4 | 4 |
| | After 2 day drying | 5 | 5 | 5 | 5 | 5 | 5 | 5 | 5 | 5 | 5 |
| | After 3 day drying | 5 | 5 | 5 | 5 | 5 | 5 | 5 | 5 | 5 | 5 |
| Coating film polishing degree (25°C /15 knot) | After 1 month | 22.3 | 23.3 | 27.7 | 26.3 | 24.3 | 19.7 | 22.2 | 17.7 | 5.3 | 7.7 |
| | After 2 month | 28.6 | 29.7 | 32.2 | 33.5 | 30.7 | 25.6 | 29.3 | 28.3 | 10.3 | 13.3 |
| | After 3 month | 35.6 | 37.6 | 40.1 | 40.7 | 39.5 | 32.3 | 37.5 | 38.8 | 14.5 | 21.2 |
| | After 4 month | 41.3 | 45.6 | 49.8 | 48.5 | 47.5 | 40.3 | 43.2 | 45.3 | 20.2 | 27.8 |
| | After 5 month | 48.9 | 52.2 | 57.7 | 55.4 | 55.4 | 49.6 | 51.3 | 53.4 | 25.5 | 33.7 |
| | After 6 month | 59.3 | 58.3 | 62.3 | 61.3 | 65.5 | 58.9 | 58.8 | 63.2 | 31.5 | 63.2 |

(continued)

| | | examples | | | | | | | | | |
|---|---|---|---|---|---|---|---|---|---|---|---|
| | | 10 | 11 | 12 | 13 | 14 | 15 | 16 | 17 | 18 | 19 |
| Stationary antifouling property | After 1 month | 0 | 0 | 0 | 0 | 0 | 0 | 0 | 0 | 0 | 0 |
| | After 2 month | 0 | 0 | 0 | 0 | 0 | 0 | 0 | 0 | 0 | 0 |
| | After 3 month | 0 | 0 | 0 | 0 | 0 | 0 | 0 | 0 | 0 | 0 |
| | After 4 month | 0 | 0 | 0 | 0 | 0 | 0 | 0 | 0 | 0 | 0 |
| | After 5 month | 0 | 0 | 0 | 0 | 0 | 0 | 0 | 0 | 0 | 0 |
| | After 6 month | 0 | 0 | 0 | 0 | 0 | 0 | 0 | 0 | 0 | 0 |
| | After 10 month | 0.5 | 0.5 | 0.5 | 0 | 0 | 0.5 | 0.5 | 0.5 | 0.5 | 0.5 |
| | After 12 month | 0.5 | 0.5 | 0.5 | 0.5 | 0.5 | 0 | 0.5 | 0.5 | 0.5 | 0.5 |

[Table 10]

| | | Comparative example | | | |
|---|---|---|---|---|---|
| | | 1 | 2 | 3 | 4 |
| VOC (g/L) | | 381 | 381 | 358 | 367 |
| Specific gravity | | 1.49 | 1.49 | 1.4 | 1.44 |
| Heating residue (wt%) | | 74.4 | 74.4 | 74.4 | 74.4 |
| Viscosity of coating mixture (dPa·s) | | 27 | 18 | 17 | 17 |
| Airless spray Workability | Atomization | B | A | A | A |
| | Appearance | B | A | A | A |
| Coating film drying characteristic drying characteristic (pressure test) | After 1 day drying | 1 | 1 | 1 | 1 |
| | After 2 day drying | 1 | 1 | 1 | 1 |
| | After 3 day drying | 1 | 1 | 1 | 1 |
| Coating film polishing degree (25°C /15 knot) | After 1 month | 20.7 | 25.4 | 23.3 | 21.3 |
| | After 2 month | 23.4 | 26.7 | 25.5 | 25.4 |
| | After 3 month | 25.7 | 27.1 | 26.7 | 27.7 |
| | After 4 month | 26.3 | 27.7 | 28.3 | 29.7 |
| | After 5 month | 27.1 | 28.3 | 29.1 | 30.3 |
| | After 6 month | 27.7 | 28.8 | 29.7 | 30.7 |
| Stationary antifouling property | After 1 month | 1 | 1 | 1 | 1 |
| | After 2 month | 2 | 1 | 2 | 3 |
| | After 3 month | 4 | 3 | 4 | 5 |
| | After 4 month | 5 | 5 | 5 | 5 |
| | After 5 month | 5 | 5 | 5 | 5 |
| | After 6 month | 5 | 5 | 5 | 5 |
| | After 10 month | 5 | 5 | 5 | 5 |
| | After 12 month | 5 | 5 | 5 | 5 |

[Table 11]

| | | example | Comparative example |
|---|---|---|---|
| | | 17 | 5 |
| VOC (g/L) | | 387 | 416 |
| Specific gravity | | 1.51 | 1.63 |
| Heating residue (wt%) | | 74.4 | 74.4 |
| Discoloration of outdoor exposure | After 1 month | ○ | Δ |
| | After 2 month | ○ | X |
| | After 3 month | ○ | X |
| | After 4 month | ○ | X |
| | After 5 month | ○ | X |
| | After 6 month | ○ | X |

[Table 12]

| | | example | Comparative example |
|---|---|---|---|
| | | 17 | 5 |
| VOC (g/L) | | 387 | 416 |
| Specific gravity | | 1.51 | 1.63 |
| Heating residue (wt%) | | 74.4 | 74.4 |
| Sunshine weather meter | After 100 hours irradiation | ○ | ○ |
| | After 500 hours irradiation | ○ | ○ |
| | After 1,000 hours irradiation | ○ | ○ |
| | After 1,500 hours irradiation | ○ | ○ |
| | After 2,000 hours irradiation | ○ | X (crack is found) |
| | After 2,500 hours irradiation | ○ | X (crack is found) |

The details of a part of starting materials used in the above-mentioned Example and Comparative Example are shown in Table 13.

[Table 13]

Table 13

| Product name | Manufacturer | Properties and others | Solid content (%) |
|---|---|---|---|
| Talc FC-1 | Fukuoka Talc Co., Ltd. | Extender pigment | 100 |
| Zinc oxide | Kyushu Hakusui Kagaku | Extender pigment | 100 |
| Novaperm Red F5RK | Clariant North America | Organic red pigments | 100 |
| Zinc omadine | Arch Chemical, Inc. | Organic antifouling agent | 100 |
| Potash feldspar | KINSEI MATIC | Potash feldspar | 100 |
| Tricresyl phosphate | Kyowa Hakko Kogyo Co., Ltd.) | Plasticizer | 100 |
| Cuintone 1500 | Zeon Corporation | Alicyclic hydrocarbon | 100 |
| Laropal A81 | BASF | Ketone resin | 100 |
| 4,5-dichloro-2-n-octyl-4-isothiazoline-3-one | Rohm & Haas Company | Organic antifouling agent | 30 |

(continued)

| Product name | Manufacturer | Properties and others | Solid content (%) |
|---|---|---|---|
| 2-(p-chlorophenyl)-3-cyano-4-bromo-5-trifluoromethyl pyrrole | JANSSENPMP | Organic antifouling agent | 100 |
| Rosin | | | 100 |
| BYK-101 | BYK CHEMICAL | Pigment dispersant | 100 |
| 2-methylthio-4-t-butylamino-6-cyclopropyl amino-s-triazine (Irgarol) | Ciba | Organic antifouling agent | 100 |
| N,N'-dimethyl-N'-tolyl-(N-fluorodichloromethylthio) sulfamide | Bayer Japan | Organic antifouling agent | 100 |
| pyridine-triphenylborane | Hokko Chemical Industry | Organic antifouling agent | 100 |
| Cupric oxide NC803 | NC Tech Co., Ltd. | Inorganic antifouling agent | 100 |
| Dis630-20XC | Kusumoto chemicals, Ltd. | Anti-sagging agent | 20 |
| Dis4200-20X | Kusumoto chemicals, Ltd. | Anti-settling agent | 20 |

Description of Numerals

10: Wood chip, 20: coating film

## Claims

1. A two-part hydrolysable antifouling coating composition free from copper and copper compound which composition comprises two liquids: a first component including a polyester resin whose a solid content acid value is 50-200 mgKOH/g, a solid content hydroxyl value is 100 mgKOH/g or less, and a viscosity at 25°C is 500mPa·s or less; and a second component having a paste form containing a zinc oxide, wherein the content of a volatile organic compound is 400g/L or less on the basis of the total amount of the first and the second components.

2. The two-part hydrolysable antifouling coating composition according to claim 1, wherein the weight average molecular weight of the polyester resin to be measured by a gel permission chromatography is 5,000 or less.

3. The two-part hydrolysable antifouling coating composition according to claims 1 or 2, wherein the content of a zinc oxide in the second component is 10-500 parts by weight relative to the polyester resin (solid content) of 100 parts by weight.

4. The two-part hydrolysable antifouling coating composition according to any one of claims 1 to 3, further comprising a rosin and/or a rosin derivative.

5. The two-part hydrolysable antifouling coating composition according to any one of claims 1 to 4, further comprising an antifouling agent.

6. The two-part hydrolysable antifouling coating composition according to any one of claims 1 to 5, further comprising a zinc pyrithione as an antifouling agent.

7. The two-part hydrolysable antifouling coating composition according to any one of claims 1 to 6, further comprising at least one plasticizer selected from a group consisting of a chlorinated paraffin, petroleum resins, ketone resins, tricresyl phosphate, polyvinyl ethyl ether, dialkyl phthalate, and (meth) acrylic polymers.

8. The two-part hydrolysable antifouling coating composition according to any one of claims 1 to 7, further comprising an extender pigment (other than zinc oxide).

**9.** The two-part hydrolysable antifouling coating composition according to any one of claims 1 to 8, further comprising a pigment dispersant.

**10.** The two-part hydrolysable antifouling coating composition according to any one of claims 1 to 9, further comprising a color pigment.

**11.** The two-part hydrolysable antifouling coating composition according to any one of claims 1 to 10, further comprising a dehydrating agent.

**12.** A two-part hydrolysable antifouling coating composition comprising two liquids : a first component including a reaction mixture (A) having a polyester resin (a3) obtained by polycondensation of an acid component (a1) and a polyvalent alcohol component (a2) ; and a second component having a zinc oxide (B), wherein the acid value and the hydroxyl value of the solid content in the reaction mixture (A) are 50-200 mgKOH/g and 100 mgKOH/g or less, respectively, a copper and a copper compound are substantially not included in the two-part hydrolysable antifouling coating composition, the content of volatile organic compound is 400 g or less with respect to 1L of the two-part hydrolysable antifouling coating composition.

**13.** An antifouling coating film formed
by hardening the two-part hydrolysable antifouling coating composition according to any one of claims 1 to 12.

**14.** An antifouling method for substrate, comprising applying or impregnating the two-part hydrolysable antifouling coating composition according to any one of claims 1 to 12, followed by
hardening and forming an antifouling coating film.

[Fig.1]

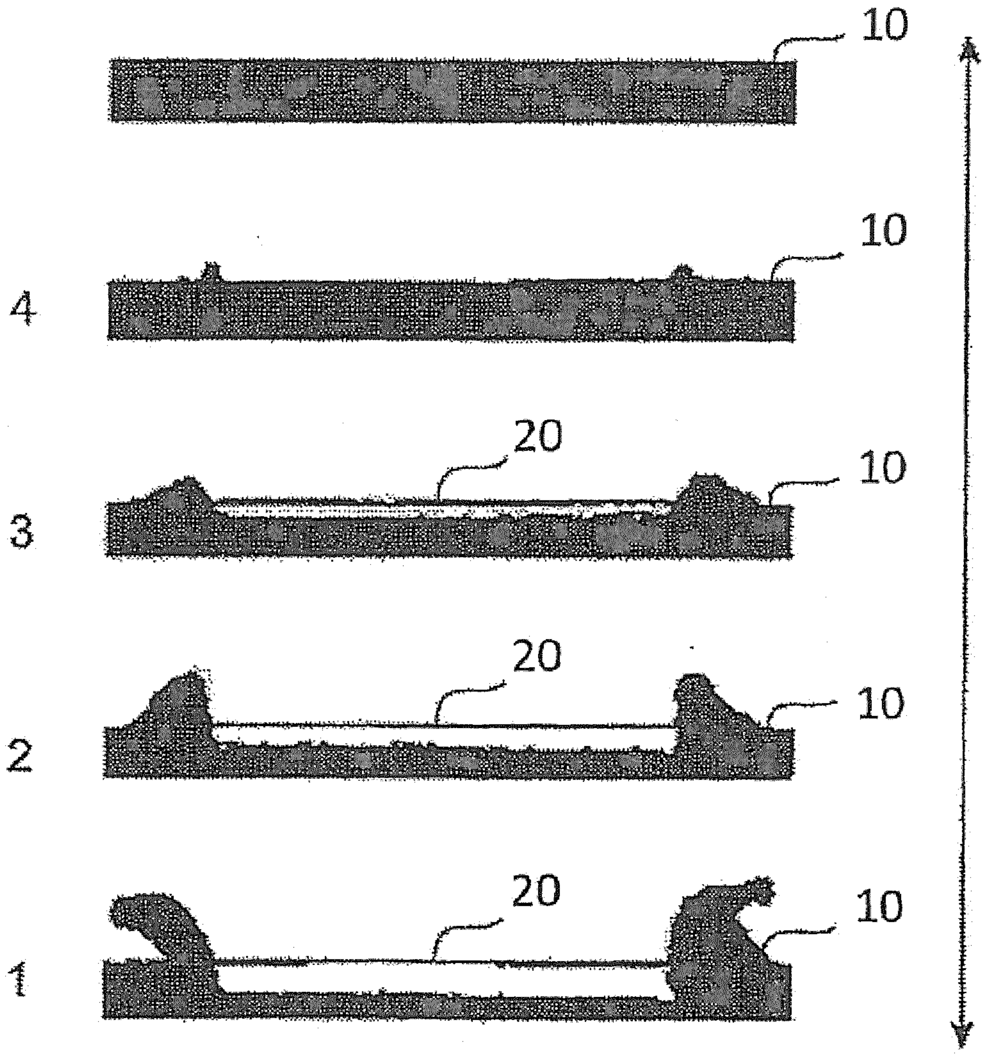

## INTERNATIONAL SEARCH REPORT

International application No.
PCT/JP2011/064466

A. CLASSIFICATION OF SUBJECT MATTER
*C09D167/00*(2006.01)i, *A01N25/10*(2006.01)i, *A01N55/02*(2006.01)i, *A01P17/00*(2006.01)i, *B05D5/00*(2006.01)i, *B63B59/04*(2006.01)i, *C09D5/16*(2006.01)i, *C09D7/12*(2006.01)i, *C09D133/04*(2006.01)i, *C09D157/02*(2006.01)i,
According to International Patent Classification (IPC) or to both national classification and IPC

B. FIELDS SEARCHED
Minimum documentation searched (classification system followed by classification symbols)
C09D167/00, A01N25/10, A01N55/02, A01P17/00, B05D5/00, B63B59/04, C09D5/16, C09D7/12, C09D133/04, C09D157/02, C09D161/02, C09D193/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2007/026692 A1 (Chugoku Marine Paints, Ltd.),<br>08 March 2007 (08.03.2007),<br>claims 1, 2, 5, 10, 13, 16, 39; paragraphs [0111], [0114]<br>& US 2009/0053166 A1 & EP 1921119 A1 | 13<br>1-12,14 |
| Y<br>A | JP 11-140376 A (Nippon Paint Co., Ltd.),<br>25 May 1999 (25.05.1999),<br>claim 1; paragraph [0051]<br>& US 4774080 A1 & EP 204456 A1 | 13<br>1-12,14 |
| A | JP 60-088033 A (Nippon Paint Co., Ltd.),<br>17 May 1985 (17.05.1985),<br>entire text<br>(Family: none) | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 August, 2011 (23.08.11) | 30 August, 2011 (30.08.11) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2011/064466

C (Continuation). DOCUMENTS CONSIDERED TO BE RELEVANT

| Category* | Citation of document, with indication, where appropriate, of the relevant passages | Relevant to claim No. |
|---|---|---|
| A | JP 59-086669 A (Kansai Paint Co., Ltd.), 18 May 1984 (18.05.1984), entire text (Family: none) | 1-14 |
| A | JP 54-119534 A (Kansai Paint Co., Ltd.), 17 September 1979 (17.09.1979), entire text & US 4270953 A1 | 1-14 |
| A | JP 07-053830 A (Japan Synthetic Rubber Co., Ltd.), 28 February 1995 (28.02.1995), entire text (Family: none) | 1-14 |
| A | JP 03-223378 A (Showa Shell Sekiyu Kabushiki Kaisha), 02 October 1991 (02.10.1991), entire text (Family: none) | 1-14 |

Form PCT/ISA/210 (continuation of second sheet) (July 2009)

**INTERNATIONAL SEARCH REPORT**

International application No.
PCT/JP2011/064466

Continuation of A. CLASSIFICATION OF SUBJECT MATTER
(International Patent Classification (IPC))

*C09D161/02*(2006.01)i, *C09D193/04*(2006.01)i

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7166106 A
- JP 7082513 A
- JP 8176501 A
- JP 7053899 A
- JP 9132736 A
- JP 11255869 A
- JP 2000248206 A
- JP 57128742 A
- JP 2196869 A
- JP 10298455 A
- JP 11323209 A
- JP W02007074656 B